(19) Europäisches Patentamt / European Patent Office / Office européen des brevets

(11) **EP 4 305 796 B1**

(12) **EUROPEAN PATENT SPECIFICATION**

(45) Date of publication and mention
of the grant of the patent:
**29.04.2026   Bulletin 2026/18**

(21) Application number: **22711647.2**

(22) Date of filing: **14.03.2022**

(51) International Patent Classification (IPC):
*H04L 5/00* *(2006.01)*   *H04W 28/18* *(2009.01)*
*H04W 72/23* *(2023.01)*   *H04W 52/14* *(2009.01)*
*H04W 52/28* *(2009.01)*   *H04W 74/0833* *(2024.01)*
*H04W 72/1268* *(2023.01)*   *H04W 72/0446* *(2023.01)*

(52) Cooperative Patent Classification (CPC):
**H04W 72/23; H04L 5/0044;** H04L 5/0039;
H04W 28/18; H04W 52/146; H04W 52/281;
H04W 72/0446; H04W 72/1268; H04W 74/0833;
H04W 74/0836; H04W 74/0838

(86) International application number:
**PCT/IB2022/052292**

(87) International publication number:
**WO 2022/190075 (15.09.2022 Gazette 2022/37)**

(54) **LOGICAL CHANNEL RESTRICTION BASED ON DUPLEX MODE**

LOGISCHE KANALBESCHRÄNKUNG AUF DER BASIS VON DUPLEXMODUS

RESTRICTION DE CANAL LOGIQUE REPOSANT SUR UN MODE DUPLEX

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **12.03.2021   US 202163160687 P**

(43) Date of publication of application:
**17.01.2024   Bulletin 2024/03**

(73) Proprietor: **Lenovo (Singapore) Pte. Ltd.
New Tech Park 556741 (SG)**

(72) Inventors:
• **LÖHR, Joachim**
**65203 Wiesbaden (DE)**
• **JUNG, Hyejung**
**Northbrook, Illinois 60062 (US)**
• **NANGIA, Vijay**
**Woodridge, Illinois 60517 (US)**
• **KUCHIBHOTLA, Ravi**
**Chicago, Illinois 60680 (US)**

(74) Representative: **Marks & Clerk LLP
15 Fetter Lane
London EC4A 1BW (GB)**

(56) References cited:
**WO-A1-2017/111821     WO-A1-2019/099361
US-A1- 2019 363 843**

**Description**

FIELD

The subject matter disclosed herein relates generally to wireless communications and more particularly relates to uplink transmission parameter selection depending on the duplex mode.

BACKGROUND

For Third Generation Partnership Project ("3GPP") New Radio ("NR", i.e., 5th generation Radio Access Technology ("RAT")), time-division duplexing ("TDD") may be used in unpaired spectrum to avoid interference (e.g., UL and/or DL interference within a network entity and UE-to-UE interference). However, TDD limits uplink ("UL") and downlink ("DL") transmission opportunities and prevents accommodating urgent UL and DL transmissions simultaneously.

Full-duplex ("FD") operation is characterized by the capability to concurrently transmit and receive at the same time and frequency resource. The FD operation at a gNB (i.e., an NR base station) facilitates reception from a group of user equipment devices ("UEs") in the UL simultaneously with the DL transmission to another (and potentially disjoint) group of UEs, coexisting at the same channel.

WO2019099361A1 describes a wireless transmit/receive unit (WTRU) with a receiver configured to receive one or more uplink (UL) grants that may include allocations associated with a regular UL (RUL) carrier and a supplementary UL (SUL) carrier associated with a common downlink (DL) carrier of a serving cell. The WTRU is configured to select data from one or more logical channels for transmission in accordance with the allocations. The WTRU may include a transmitter configured to transmit data from one logical channel on the RUL carrier and to transmit data from another logical channel on the SUL carrier in accordance with the allocations.

US2019363843A1 describes a UE having a transmitter configured to transmit a capability ID corresponding to a plurality of capabilities of the UE to a gNB. The UE is configured to receive first and second different DCI formats providing the UE with different control information. The second format has a fixed length field used to identify the DCI format, while a variable length field is be used to indicate resources and other information for transmitting or receiving data on a shared channel in accordance with the capability ID. The UE receives a third DCI format indicating that the UE should not monitor a PDCCH for a period.

WO2017111821A1 describes a user equipment (UE) with full-duplex capability. The UE can receive downlink broadcast information from the eNodeB from which the UE can determine that the eNodeB supports a full-duplex mode. The UE can transmit a UE capability information message to the eNodeB indicating that the UE supports the full-duplex mode, wherein the UE is configured to communicate with the eNodeB in accordance with the full-duplex mode.

BRIEF SUMMARY

Disclosed are procedures for selecting an uplink transmission parameter based on duplex mode. Said procedures may be implemented by apparatus, systems, methods, or computer program products. The invention is defined by the independent claims. Preferred embodiments are set out in the dependent claims.

One method at a User Equipment ("UE") for selecting an uplink transmission parameter based on duplex mode includes receiving a configuration that contains: A) a first set of logical channel ("LCH") restriction configurations, and B) a second set of LCH restriction configurations different than the first set of logical channel restriction configurations. The method includes receiving an uplink resource allocation from a network entity, generating a transport block ("TB") corresponding to the uplink resource allocation, where the uplink resource allocation indicates uplink resources for an initial physical uplink shared channel ("PUSCH") transmission. The TB is generated based on the first set of LCH restriction configurations when the initial PUSCH transmission is to be transmitted on first a set of symbols indicated as being operated in a first duplex mode. Otherwise, the TB is generated based on the second set of LCH restriction configurations when the initial PUSCH transmission is to be transmitted on a second set of symbols having at least one symbol indicated as being operated in a second duplex mode. The method includes transmitting the generated TB on the allocated uplink resources. Furthermore, the first duplex mode corresponds to a full duplex mode and the second duplex mode corresponds to a non-full duplex mode.

BRIEF DESCRIPTION OF THE DRAWINGS

A more particular description of the embodiments briefly described above will be rendered by reference to specific embodiments that are illustrated in the appended drawings. Understanding that these drawings depict only some embodiments and are not therefore to be considered to be limiting of scope, the embodiments will be described and explained with additional specificity and detail through the use of the accompanying drawings, in which:

Figure 1 is a block diagram illustrating one embodiment of a wireless communication system for selecting an uplink transmission parameter based on duplex mode;

Figure 2 is a diagram illustrating one embodiment of a Third Generation Partnership Project ("3 GPP") New Radio ("NR") protocol stack;

Figure 3 is a diagram illustrating one embodiment of time and frequency usage for varying duplex modes;

Figure 4 is a diagram illustrating one embodiment of Abstract Syntax Notation One ("ASN.1") code for a *MsgA-PUSCH-Config* information element;

Figure 5 is a block diagram illustrating one embodiment of a user equipment apparatus that may be used for selecting an uplink transmission parameter based on a duplex mode;

Figure 6 is a block diagram illustrating one embodiment of a network apparatus that may be used for selecting an uplink transmission parameter based on a duplex mode;

Figure 7 is a flowchart diagram illustrating one embodiment of a method for selecting an uplink transmission parameter based on a duplex mode;

Figure 8 is a flowchart diagram illustrating another embodiment of a method for selecting an uplink transmission parameter based on a duplex mode;

Figure 9 is a flowchart diagram illustrating one embodiment of a method for RACH procedure in full-duplex mode; and

Figure 10 is a flowchart diagram illustrating another embodiment of a method for RACH procedure in full-duplex mode.

DETAILED DESCRIPTION

As will be appreciated by one skilled in the art, aspects of the embodiments may be embodied as a system, apparatus, method, or program product. Accordingly, embodiments may take the form of an entirely hardware embodiment, an entirely software embodiment (including firmware, resident software, micro-code, etc.) or an embodiment combining software and hardware aspects.

For example, the disclosed embodiments may be implemented as a hardware circuit comprising custom very-large-scale integration ("VLSI") circuits or gate arrays, off-the-shelf semiconductors such as logic chips, transistors, or other discrete components. The disclosed embodiments may also be implemented in programmable hardware devices such as field programmable gate arrays, programmable array logic, programmable logic devices, or the like. As another example, the disclosed embodiments may include one or more physical or logical blocks of executable code which may, for instance, be organized as an object, procedure, or function.

Furthermore, embodiments may take the form of a program product embodied in one or more computer readable storage devices storing machine readable code, computer readable code, and/or program code, referred hereafter as code. The storage devices may be tangible, non-transitory, and/or non-transmission. The storage devices may not embody signals. In a certain embodiment, the storage devices only employ signals for accessing code.

Any combination of one or more computer readable medium may be utilized. The computer readable medium may be a computer readable storage medium. The computer readable storage medium may be a storage device storing the code. The storage device may be, for example, but not limited to, an electronic, magnetic, optical, electromagnetic, infrared, holographic, micromechanical, or semiconductor system, apparatus, or device, or any suitable combination of the foregoing.

More specific examples (a non-exhaustive list) of the storage device would include the following: an electrical connection having one or more wires, a portable computer diskette, a hard disk, a random-access memory ("RAM"), a read-only memory ("ROM"), an erasable programmable read-only memory ("EPROM" or Flash memory), a portable compact disc read-only memory ("CD-ROM"), an optical storage device, a magnetic storage device, or any suitable combination of the foregoing. In the context of this document, a computer readable storage medium may be any tangible medium that can contain or store a program for use by or in connection with an instruction execution system, apparatus, or device.

Code for carrying out operations for embodiments may be any number of lines and may be written in any combination of one or more programming languages including an object-oriented programming language such as Python, Ruby, Java, Smalltalk, C++, or the like, and conventional procedural programming languages, such as the "C" programming language, or the like, and/or machine languages such as assembly languages. The code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network ("LAN"), wireless LAN ("WLAN"), or a wide area network ("WAN"), or the connection may be made to an external computer (for example, through the Internet using an Internet Service Provider ("ISP")).

Furthermore, the described features, structures, or characteristics of the embodiments may be combined in any suitable manner. In the following description, numerous specific details are provided, such as examples of programming, software modules, user selections, network transactions, database queries, database structures, hardware modules, hardware circuits, hardware chips, etc., to provide a thorough understanding of embodiments. One skilled in the relevant art will recognize, however, that embodiments may be practiced without one or more of the specific details, or with other methods, components, materials, and so forth. In other instances, well-known structures, materials, or operations are not shown or described in detail to avoid obscuring aspects of an embodiment.

Reference throughout this specification to "one embodiment," "an embodiment," or similar language means that a particular feature, structure, or characteristic described in connection with the embodiment is included in at least one embodiment. Thus, appearances of the phrases "in one embodiment," "in an embodiment," and similar language throughout this specification may, but do not necessarily, all refer to the same embodiment, but mean "one or more but not all embodiments" unless expressly specified otherwise. The terms "including," "comprising," "having," and variations thereof mean "including but not limited to," unless expressly specified otherwise. An enumerated listing of items does not imply that any or all of the items are mutually exclusive, unless expressly specified otherwise. The terms "a," "an," and "the" also refer to "one or more" unless expressly specified otherwise.

As used herein, a list with a conjunction of "and/or" includes any single item in the list or a combination of items in the list. For example, a list of A, B and/or C includes only A, only B, only C, a combination of A and B, a combination of B and C, a combination of A and C or a combination of A, B and C. As used herein, a list using the terminology "one or more of" includes any single item in the list or a combination of items in the list. For example, one or more of A, B and C includes only A, only B, only C, a combination of A and B, a combination of B and C, a combination of A and C or a combination of A, B and C. As used herein, a list using the terminology "one of" includes one and only one of any single item in the list. For example, "one of A, B and C" includes only A, only B or only C and excludes combinations of A, B and C. As used herein, "a member selected from the group consisting of A, B, and C," includes one and only one of A, B, or C, and excludes combinations of A, B, and C." As used herein, "a member selected from the group consisting of A, B, and C and combinations thereof" includes only A, only B, only C, a combination of A and B, a combination of B and C, a combination of A and C or a combination of A, B and C.

Aspects of the embodiments are described below with reference to schematic flowchart diagrams and/or schematic block diagrams of methods, apparatuses, systems, and program products according to embodiments. It will be understood that each block of the schematic flowchart diagrams and/or schematic block diagrams, and combinations of blocks in the schematic flowchart diagrams and/or schematic block diagrams, can be implemented by code. This code may be provided to a processor of a general-purpose computer, special purpose computer, or other programmable data processing apparatus to produce a machine, such that the instructions, which execute via the processor of the computer or other programmable data processing apparatus, create means for implementing the functions/acts specified in the flowchart diagrams and/or block diagrams.

The code may also be stored in a storage device that can direct a computer, other programmable data processing apparatus, or other devices to function in a particular manner, such that the instructions stored in the storage device produce an article of manufacture including instructions which implement the function/act specified in the flowchart diagrams and/or block diagrams.

The code may also be loaded onto a computer, other programmable data processing apparatus, or other devices to cause a series of operational steps to be performed on the computer, other programmable apparatus, or other devices to produce a computer implemented process such that the code which execute on the computer or other programmable apparatus provide processes for implementing the functions/acts specified in the flowchart diagrams and/or block diagrams.

The call-flow diagrams, flowchart diagrams and/or block diagrams in the Figures illustrate the architecture, functionality, and operation of possible implementations of apparatuses, systems, methods, and program products according to various embodiments. In this regard, each block in the flowchart diagrams and/or block diagrams may represent a module, segment, or portion of code, which includes one or more executable instructions of the code for implementing the specified logical function(s).

It should also be noted that, in some alternative implementations, the functions noted in the block may occur out of the order noted in the Figures. For example, two blocks shown in succession may, in fact, be executed substantially concurrently, or the blocks may sometimes be executed in the reverse order, depending upon the functionality involved. Other steps and methods may be conceived that are equivalent in function, logic, or effect to one or more blocks, or portions thereof, of the illustrated Figures.

Although various arrow types and line types may be employed in the call-flow, flowchart and/or block diagrams, they are understood not to limit the scope of the corresponding embodiments. Indeed, some arrows or other connectors may be used to indicate only the logical flow of the depicted embodiment. For instance, an arrow may indicate a waiting or monitoring period of unspecified duration between enumerated steps of the depicted embodiment. It will also be noted that each block of the block diagrams and/or flowchart diagrams, and combinations of blocks in the block diagrams and/or flowchart diagrams, can be implemented by special purpose hardware-based systems that perform the specified functions or acts, or combinations of special purpose hardware and code.

The description of elements in each figure may refer to elements of proceeding figures. Like numbers refer to like elements in all figures, including alternate embodiments of like elements.

Generally, the present disclosure describes systems, methods, and apparatuses for selecting an uplink transmission parameter based on a duplex mode. In certain embodiments, the methods may be performed using computer code embedded on a computer-readable medium. In certain embodiments, an apparatus or system may include a computer-readable medium containing computer-readable code which, when executed by a processor, causes the apparatus or system to perform at least a portion of the below described solutions.

Disclosed herein are techniques to provide a UE with UL/DL symbols/slots or UL/DL resources opportunistically, while on-going DL/UL traffics being served, when a serving network entity is capable of simultaneous reception and transmission (i.e., capable of full duplexing with a certain level of self-interference suppression).

Full duplex ("FD") operation at a serving gNB allows a gNB to receive UL transmissions from a first set of UEs and transmit DL transmissions to a second set of UEs at the same time. Such an operation could bring gains/enhancements in terms of increasing spectral efficiency and/or reducing latency compared to a half-duplex ("HDX") gNB. As used herein, the term "FD-gNB" refers to a RAN node (i.e., gNB) that is capable of full-duplex operation.

FD operation is characterized by the capability to concurrently transmit and receive at the same time and frequency resource, which is facilitated by the means of self-interference cancellation ("SIC") at an FD node. The FD operation at a gNB facilitates reception from a group of UEs in the uplink simultaneously with the DL transmission to another (and potentially disjoint) group of UEs, coexisting at the same channel. As a result, this shows potential for an enhanced spectral efficiency and a reduced latency.

Ultimately, some users may require or support FD operations; that is, they will need to use the same Physical Resource Blocks ("PRBs") in uplink and downlink. Using the same PRB(s) for both transmission and reception will cause self-interference ("SI"); that is, the transmitted signal leaks energy onto the receive chain, contaminating the reception of the useful signal. To leverage the advantages of FD, SI needs to be properly managed, and, for this reason, self-interference cancellation ("SIC") techniques are being studied widely.

On the UE side, however, FD operation is challenged by the UE SIC capability, which is limited in a highly dynamic and power-constrained environment. On the gNB side, it is considered feasible that SIC can be adequately performed with a hybrid of analog filtering and digital cancellation techniques.

FD systems in which the gNB is FD and the UEs are half-duplex ("HDX"), are reuse-1/2 because they can use the same time-frequency twice in a cell to schedule users in both uplink ("UL") and downlink ("DL") directions. Realizing such FD networks in practice would be extremely useful to increase capacity in heavily loaded networks.

A viable system-level solution - in terms of hardware complexity and form-factors at the transceivers - is to use full-duplex only at the multi-antenna gNBs, while the UEs are still operating in HDX mode. Using FD communication in the gNB, there is both intra- and inter-cell cross-link interference ("CLI") on UL-DL users, SI at each gNB, and gNB-to-gNB interference.

Disclosed herein are mechanisms to enable efficient uplink transmissions in slots which are operated by the gNB in a full duplex mode, i.e., simultaneous DL transmissions occur in the slot(s) where UL transmission(s) take place. When a UE transmits an uplink channel/signal in symbols indicated as flexible or downlink, the Signal-to-Interference and Noise Ratio ("SINR") of the uplink channel/signal at a receiver of a network entity is likely to be very low due to potential DL transmission by the network entity. Therefore, the disclosure provides in particular methods ensuring that QoS requirements are fulfilled for the UL transmissions in slots which are operated in FD mode at the gNB.

This disclosure provides mechanisms to select an uplink transmission parameter based on a duplex mode, wherein, at least the following enhancements for parameter selection are proposed and described:

In some embodiments, the UE applies a different set of LCH restriction configurations for the generation of a TB according to an uplink resource allocation depending on the duplex mode indicated by the gNB for the set of symbols where the uplink transmission takes place. In certain embodiments, the UE applies a different set of LCH restriction configurations for a PUSCH transmission taken place on a set of symbol indicated as full duplex and half duplex. The uplink resource allocation (e.g., UL DCI) indicates which set of LCH restrictions is to be applied by the UE during LCP procedure.

In some embodiments, a LCH /radio bearer is configured with a parameter indicating which duplex mode is supported by the LCH/radio bearer. In certain embodiments, a new parameter/field is configured, e.g., in the *logicalChannelConfig* IE, which indicates whether data of this LCH/radio bearer is allowed to be multiplexed in a PUSCH/TB which is sent in a set of symbols/slot/PUSCH duration which gNB operates in full duplex mode, i.e., simultaneous downlink transmission.

In some embodiments, the UL DCI allocating uplink resource for a PUSCH transmission indicates the duplex mode operated by the gNB for the corresponding PUSCH. In some embodiments, the UE applies a different set of power control parameters (i.e., open-loop, pathloss reference, and closed-loop configurations) for a scheduled UL transmission(s) depending on the duplexing mode the gNB operates for the corresponding set of symbols/slot/PUSCH duration.

In some embodiments, the UE applies an MCS value and alpha value separately predefined and/or separately configured for the MsgA-PUSCH transmission if the MsgA PUSCH transmission takes place in at least one symbol indicated as being operated in full-duplex mode. In some embodiments, the UE determines the duplex state of a symbol/set of symbols/slot at some predefined specific time instance, e.g., PDCCH occasion/slot where a first UL grant for a new transmission is received since power headroom report ("PHR") has been triggered or some predefined time before an CG UL resource used for PHR transmission/calculation, in order to determine whether a PHR is calculated based on power control parameters used for Full duplex mode or non-full duplex mode

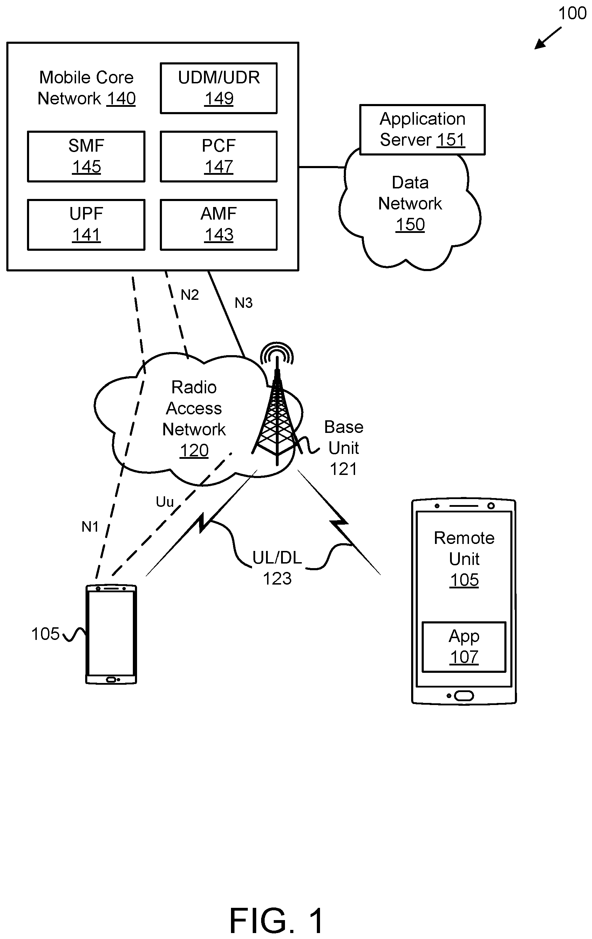

Figure 1 depicts a wireless communication system 100 for selecting an uplink transmission parameter based on duplex mode, according to embodiments of the disclosure. In one embodiment, the wireless communication system 100 includes at least one remote unit 105, a radio access network ("RAN") 120, and a mobile core network 140. The RAN 120 and the mobile core network 140 form a mobile communication network. The RAN 120 may be composed of a base unit 121 with which the remote unit 105 communicates using wireless communication links 123. Even though a specific number of remote units 105, base units 121, wireless communication links 123, RANs 120, and mobile core networks 140 are depicted in Figure 1, one of skill in the art will recognize that any number of remote units 105, base units 121, wireless communication links 123, RANs 120, and mobile core networks 140 may be included in the wireless communication system 100.

In one implementation, the RAN 120 is compliant with the Fifth-Generation ("5G") cellular system specified in the Third Generation Partnership Project ("3GPP") specifications. For example, the RAN 120 may be a Next Generation Radio Access Network ("NG-RAN"), implementing New Radio ("NR") Radio Access Technology ("RAT") and/or Long-Term Evolution ("LTE") RAT. In another example, the RAN 120 may include non-3GPP RAT (e.g., Wi-Fi® or Institute of Electrical and Electronics Engineers ("IEEE") 802.11-family compliant WLAN). In another implementation, the RAN 120 is compliant with the LTE system specified in the 3GPP specifications. More generally, however, the wireless communication system 100 may implement some other open or proprietary communication network, for example Worldwide Interoperability for Microwave Access ("WiMAX") or IEEE 802.16-family standards, among other networks. The present disclosure is not intended to be limited to the implementation of any particular wireless communication system architecture or protocol.

In one embodiment, the remote units 105 may include computing devices, such as desktop computers, laptop computers, personal digital assistants ("PDAs"), tablet computers, smart phones, smart televisions (e.g., televisions connected to the Internet), smart appliances (e.g., appliances connected to the Internet), set-top boxes, game consoles, security systems (including security cameras), vehicle on-board computers, network devices (e.g., routers, switches, modems), or the like. In some embodiments, the remote units 105 include wearable devices, such as smart watches, fitness bands, optical head-mounted displays, or the like. Moreover, the remote units 105 may be referred to as the UEs, subscriber units, mobiles, mobile stations, users, terminals, mobile terminals, fixed terminals, subscriber stations, user terminals, wireless transmit/receive unit ("WTRU"), a device, or by other terminology used in the art. In various embodiments, the remote unit 105 includes a subscriber identity and/or identification module ("SIM") and the mobile equipment ("ME") providing mobile termination functions (e.g., radio transmission, handover, speech encoding and decoding, error detection and correction, signaling and access to the SIM). In certain embodiments, the remote unit 105 may include a terminal equipment ("TE") and/or be embedded in an appliance or device (e.g., a computing device, as described above).

The remote units 105 may communicate directly with one or more of the base units 121 in the RAN 120 via uplink ("UL") and downlink ("DL") communication signals. Furthermore, the UL and DL communication signals may be carried over the wireless communication links 123. Furthermore, the UL communication signals may comprise one or more uplink channels, such as the Physical Uplink Control Channel ("PUCCH") and/or Physical Uplink Shared Channel ("PUSCH"), while the DL communication signals may comprise one or more downlink channels, such as the Physical Downlink Control Channel ("PDCCH") and/or Physical Downlink Shared Channel ("PDSCH"). Here, the RAN 120 is an intermediate network that provides the remote units 105 with access to the mobile core network 140.

In some embodiments, the remote units 105 communicate with an application server 151 via a network connection with the mobile core network 140. For example, an application 107 (e.g., web browser, media client, telephone and/or Voice-over-Internet-Protocol ("VoIP") application) in a remote unit 105 may trigger the remote unit 105 to establish a protocol data unit ("PDU") session (or other data connection) with the mobile core network 140 via the RAN 120. The mobile core network 140 then relays traffic between the remote unit 105 and the application server 151 in the packet data network 150 using the PDU session. The PDU session represents a logical connection between the remote unit 105 and the User Plane Function ("UPF") 141.

In order to establish the PDU session (or PDN connection), the remote unit 105 must be registered with the mobile core network 140 (also referred to as "attached to the mobile core network" in the context of a Fourth Generation ("4G") system). Note that the remote unit 105 may establish one or more PDU sessions (or other data connections) with the mobile core network 140. As such, the remote unit 105 may have at least one PDU session for communicating with the packet data network 150. The remote unit 105 may establish additional PDU sessions for communicating with other data networks and/or other communication peers.

In the context of a 5G system ("5GS"), the term "PDU Session" refers to a data connection that provides end-to-end ("E2E") user plane ("UP") connectivity between the remote unit 105 and a specific Data Network ("DN") through the UPF 141. A PDU Session supports one or more Quality of Service ("QoS") Flows. In certain embodiments, there may be a one-to-one mapping between a QoS Flow and a QoS profile, such that all packets belonging to a specific QoS Flow have the same 5G QoS Identifier ("5QI").

In the context of a 4G/LTE system, such as the Evolved Packet System ("EPS"), a Packet Data Network ("PDN") connection (also referred to as EPS session) provides E2E UP connectivity between the remote unit and a PDN. The PDN connectivity procedure establishes an EPS Bearer, i.e., a tunnel between the remote unit 105 and a PDN Gateway ("PGW", not shown) in the mobile core network 140. In certain embodiments, there is a one-to-one mapping between an EPS Bearer and a QoS profile, such that all packets belonging to a specific EPS Bearer have the same QoS Class Identifier ("QCI").

The base units 121 may be distributed over a geographic region. In certain embodiments, a base unit 121 may also be referred to as an access terminal, an access point, a base, a base station, a Node-B ("NB"), an Evolved Node B (abbreviated as eNodeB or "eNB," also known as Evolved Universal Terrestrial Radio Access Network ("E-UTRAN") Node B), a 5G/NR Node B ("gNB"), a Home Node-B, a relay node, a RAN node, or by any other terminology used in the art. The base units 121 are generally part of a RAN, such as the RAN 120, that may include one or more controllers communicably coupled to one or more corresponding base units 121. These and other elements of radio access network are not illustrated but are well known generally by those having ordinary skill in the art. The base units 121 connect to the mobile core network 140 via the RAN 120.

The base units 121 may serve a number of remote units 105 within a serving area, for example, a cell or a cell sector, via a wireless communication link 123. The base units 121 may communicate directly with one or more of the remote units 105 via communication signals. Generally, the base units 121 transmit DL communication signals to serve the remote units 105 in the time, frequency, and/or spatial domain. Furthermore, the DL communication signals may be carried over the wireless communication links 123. The wireless communication links 123 may be any suitable carrier in licensed or unlicensed radio spectrum. The wireless communication links 123 facilitate communication between one or more of the remote units 105 and/or one or more of the base units 121.

Note that during NR operation on unlicensed spectrum (referred to as "NR-U"), the base unit 121 and the remote unit 105 communicate over unlicensed (i.e., shared) radio spectrum. Similarly, during LTE operation on unlicensed spectrum (referred to as "LTE-U"), the base unit 121 and the remote unit 105 also communicate over unlicensed (i.e., shared) radio spectrum.

In one embodiment, the mobile core network 140 is a 5G Core network ("5GC") or an Evolved Packet Core ("EPC"), which may be coupled to a packet data network 150, like the Internet and private data networks, among other data networks. A remote unit 105 may have a subscription or other account with the mobile core network 140. In various embodiments, each mobile core network 140 belongs to a single mobile network operator ("MNO") and/or Public Land Mobile Network ("PLMN"). The present disclosure is not intended to be limited to the implementation of any particular wireless communication system architecture or protocol.

The mobile core network 140 includes several network functions ("NFs"). As depicted, the mobile core network 140 includes at least one UPF 141. The mobile core network 140 also includes multiple control plane ("CP") functions including, but not limited to, an Access and Mobility Management Function ("AMF") 143 that serves the RAN 120, a Session Management Function ("SMF") 145, a Policy Control Function ("PCF") 147, a Unified Data Management function ("UDM") and a User Data Repository ("UDR"). In some embodiments, the UDM is co-located with the UDR, depicted as combined entity "UDM/UDR" 149. Although specific numbers and types of network functions are depicted in Figure 1, one of skill in the art will recognize that any number and type of network functions may be included in the mobile core network 140.

The UPF(s) 141 is/are responsible for packet routing and forwarding, packet inspection, QoS handling, and external PDU session for interconnecting Data Network ("DN"), in the 5G architecture. The AMF 143 is responsible for termination of Non-Access Spectrum ("NAS") signaling, NAS ciphering and integrity protection, registration management, connection management, mobility management, access authentication and authorization, security context management. The SMF 145 is responsible for session management (i.e., session establishment, modification, release), remote unit (i.e., UE) Internet Protocol ("IP") address allocation and management, DL data notification, and traffic steering configuration of the UPF 141 for proper traffic routing.

The PCF 147 is responsible for unified policy framework, providing policy rules to CP functions, access subscription information for policy decisions in UDR. The UDM is responsible for generation of Authentication and Key Agreement ("AKA") credentials, user identification handling, access authorization, subscription management. The UDR is a repository of subscriber information and may be used to service a number of network functions. For example, the UDR may store subscription data, policy-related data, subscriber-related data that is permitted to be exposed to third party applications, and the like.

In various embodiments, the mobile core network 140 may also include a Network Repository Function ("NRF") (which provides Network Function ("NF") service registration and discovery, enabling NFs to identify appropriate services in one another and communicate with each other over Application Programming Interfaces ("APIs")), a Network Exposure Function ("NEF") (which is responsible for making network data and resources easily accessible to customers and network partners), an Authentication Server Function ("AUSF"), or other NFs defined for the 5GC. When present, the AUSF may act as an authentication server and/or authentication proxy, thereby allowing the AMF 143 to authenticate a remote unit 105. In certain embodiments, the mobile core network 140 may include an authentication, authorization, and accounting ("AAA") server.

In various embodiments, the mobile core network 140 supports different types of mobile data connections and different types of network slices, wherein each mobile data connection utilizes a specific network slice. Here, a "network slice" refers to a portion of the mobile core network 140 optimized for a certain traffic type or communication service. For example, one or more network slices may be optimized for enhanced mobile broadband ("eMBB") service. As another example, one or more network slices may be optimized for ultra-reliable low-latency communication ("URLLC") service. In other examples, a network slice may be optimized for machine-type communication ("MTC") service, massive MTC ("mMTC") service, Internet-of-Things ("IoT") service. In yet other examples, a network slice may be deployed for a specific application service, a vertical service, a specific use case, etc.

A network slice instance may be identified by a single-network slice selection assistance information ("S-NSSAI") while a set of network slices for which the remote unit 105 is authorized to use is identified by network slice selection assistance information ("NSSAI"). Here, "NSSAI" refers to a vector value including one or more S-NSSAI values. In certain embodiments, the various network slices may include separate instances of network functions, such as the SMF 145 and UPF 141. In some embodiments, the different network slices may share some common network functions, such as the AMF 143. The different network slices are not shown in Figure 1 for ease of illustration, but their support is assumed.

While Figure 1 depicts components of a 5G RAN and a 5G core network, the described embodiments for selecting an uplink transmission parameter based on duplex mode apply to other types of communication networks and RATs, including IEEE 802.11 variants, Global System for Mobile Communications ("GSM", i.e., a 2G digital cellular network), General Packet Radio Service ("GPRS"), Universal Mobile Telecommunications System ("UMTS"), LTE variants, CDMA 2000, Bluetooth, ZigBee, Sigfox, and the like.

Moreover, in an LTE variant where the mobile core network 140 is an EPC, the depicted network functions may be replaced with appropriate EPC entities, such as a Mobility Management Entity ("MME"), a Serving Gateway ("SGW"), a PGW, a Home Subscriber Server ("HSS"), and the like. For example, the AMF 143 may be mapped to an MME, the SMF 145 may be mapped to a control plane portion of a PGW and/or to an MME, the UPF 141 may be mapped to an SGW and a user plane portion of the PGW, the UDM/UDR 149 may be mapped to an HSS, etc.

Disclosed are schemes to allow a network entity to dynamically schedule UL transmissions with different LCH restriction configurations and/or uplink transmission parameter in order to address different interference situations/different received SINRs when operating in different duplex modes, i.e., half-duplex and full-duplex. These schemes provide support for QoS-aware uplink scheduling, taking the QoS requirements of the associated radio bearers into account.

In the following descriptions, the term "gNB" is used for the base station/ base unit, but it is replaceable by any other radio access node, e.g., RAN node, ng-eNB, eNB, Base Station ("BS"), Access Point ("AP"), NR BS, 5G NB, Transmission and Reception Point ("TRP"), etc. Additionally, the term "UE" is used for the mobile station/ remote unit, but it is replaceable by any other remote device, e.g., remote unit, MS, ME, etc. Further, the operations are described mainly in the context of 5G NR. However, the below described solutions/methods are also equally applicable to other mobile communication systems for selecting an uplink transmission parameter based on duplex mode.

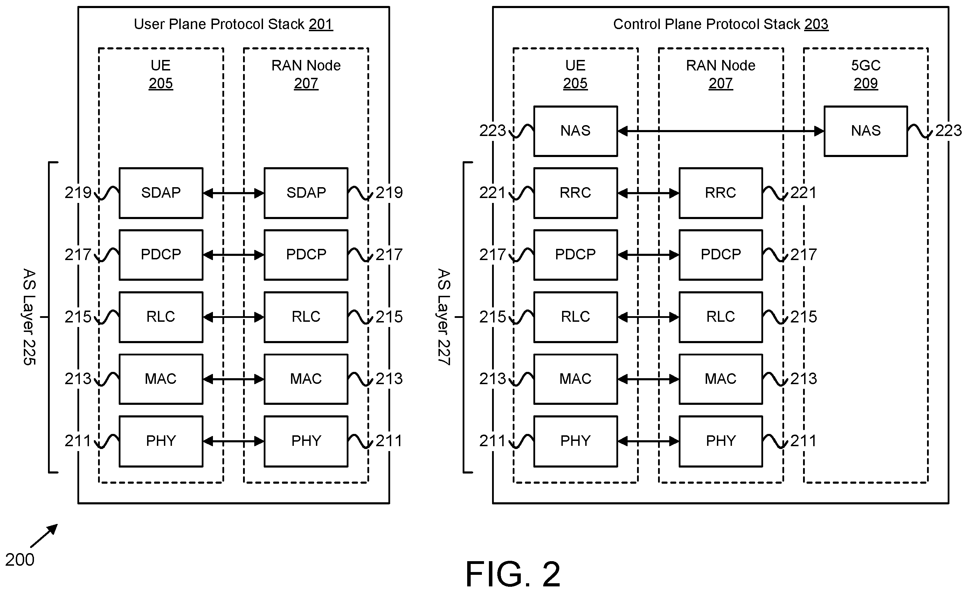

Figure 2 depicts a NR protocol stack 200, according to embodiments of the disclosure. While Figure 2 shows a UE 205, a RAN node 207 and the 5G core network 209, these are representative of a set of remote units 105 interacting with a base unit 121 and a mobile core network 140. As depicted, the protocol stack 200 comprises a User Plane protocol stack 201 and a Control Plane protocol stack 203. The User Plane protocol stack 201 includes a physical ("PHY") layer 211, a Medium Access Control ("MAC") sublayer 213, a Radio Link Control ("RLC") sublayer 215, a Packet Data Convergence Protocol ("PDCP") sublayer 217, and Service Data Adaptation Protocol ("SDAP") layer 219. The Control Plane protocol stack 203 includes a physical layer 211, a MAC sublayer 213, a RLC sublayer 215, and a PDCP sublayer 217. The Control Place protocol stack 203 also includes a Radio Resource Control ("RRC") layer 221 and a Non-Access Stratum ("NAS") layer 223.

The AS layer 225 (also referred to as "AS protocol stack") for the User Plane protocol stack 201 consists of at least SDAP, PDCP, RLC and MAC sublayers, and the physical layer. The AS layer 227 for the Control Plane protocol stack 203 consists of at least RRC, PDCP, RLC and MAC sublayers, and the physical layer. The Layer-1 ("L1") contains the PHY layer 211. The Layer-2 ("L2") is split into the SDAP, PDCP, RLC and MAC sublayers. The Layer-3 ("L3") includes the RRC sublayer 221 and the NAS layer 223 for the control plane and includes, e.g., an Internet Protocol ("IP") layer or PDU Layer (note depicted) for the user plane. L1 and L2 are referred to as "lower layers," while L3 and above (e.g., transport layer, application layer) are referred to as "higher layers" or "upper layers." As an example, "upper layer signaling" may refer to signaling exchange at the RRC layer 221.

The physical layer 211 offers transport channels to the MAC sublayer 213. The MAC sublayer 213 offers logical channels to the RLC sublayer 215. The RLC sublayer 215 offers RLC channels to the PDCP sublayer 217. The PDCP sublayer 217 offers radio bearers to the SDAP sublayer 219 and/or RRC layer 221. The SDAP sublayer 219 offers QoS flows to the core network (e.g., 5GC). The RRC layer 221 provides for the addition, modification, and release of Carrier Aggregation ("CA") and/or Dual Connectivity ("DC"). The RRC layer 221 also manages the establishment, configuration, maintenance, and release of Signaling Radio Bearers ("SRBs") and Data Radio Bearers ("DRBs").

The NAS layer 223 is between the UE 205 and the 5GC 209. NAS messages are passed transparently through the RAN. The NAS layer 223 is used to manage the establishment of communication sessions and for maintaining continuous communications with the UE 205 as it moves between different cells of the RAN. In contrast, the AS layer 225/227 is between the UE 205 and the RAN carries information over the wireless portion of the network. While not depicted in Figure 2, the IP layer exists above the NAS layer 223, a transport layer exists above the IP layer, and an application layer exists above the transport layer.

The MAC layer 213 is the lowest sublayer in the Layer-2 architecture of the NR protocol stack. Its connection to the PHY layer 211 below is through transport channels, and the connection to the RLC layer 215 above is through logical channels. The MAC layer 213 therefore performs multiplexing and demultiplexing between logical channels and transport channels: the MAC layer 213 in the transmitting side constructs MAC PDUs, known as transport blocks, from MAC Service Data Units ("SDUs") received through logical channels, and the MAC layer 213 in the receiving side recovers MAC SDUs from MAC PDUs received through transport channels.

The MAC layer 213 provides a data transfer service for the RLC layer 215 through logical channels, which are either control logical channels which carry control data (e.g., RRC signaling) or traffic logical channels which carry user plane data. On the other hand, the data from the MAC layer 213 is exchanged with the physical layer through transport channels, which are classified as downlink or uplink. Data is multiplexed into transport channels depending on how it is transmitted over the air.

The PHY layer 211 is responsible for the actual transmission of data and control information via the air interface, i.e., the PHY Layer 211 carries all information from the MAC transport channels over the air interface on the transmission side. Some of the important functions performed by the PHY layer 211 include coding and modulation, link adaptation (e.g., Adaptive Modulation and Coding ("AMC")), power control, cell search (for initial synchronization and handover purposes) and other measurements (inside the 3GPP system (i.e., NR and/or LTE system) and between systems) for the RRC layer 221. The PHY layer 211 performs transmissions based on transmission parameters, such as the modulation scheme, the coding rate (i.e., the modulation and coding scheme ("MCS")), the number of physical resource blocks, etc.

This disclosure presents methods to enable efficient uplink transmissions in slots which are operated by gNB in a full duplex mode, i.e., simultaneous DL transmissions occur in the slot(s) where UL transmission(s) take place. When a UE transmits an uplink channel/signal in symbols indicated as flexible or downlink, the signal-to-interference and noise ratio ("SINR") of the uplink channel/signal at a receiver of a network entity is likely to be very low due to potential DL transmission by the network entity. Therefore, the disclosure provides methods ensuring that QoS requirements are fulfilled for the UL transmissions in slots which are operated in FD mode at the gNB.

UE applies a different set of LCH restriction configurations for an UL transmission depending on the duplexing mode the gNB operates for the corresponding PUSCH duration. For example, for cases when gNB operates in a full-duplex mode, UE shall not multiplex URLLC traffic to a PUSCH transmission due to the low SINR of the uplink channel/signal at a receiver of a network entity due to potential DL transmission by the network entity. Similarly, a different set of power control parameter and/or uplink transmission parameter is used for UL transmissions which are operated in FD mode by gNB.

According to a first embodiment, UE applies a different set of LCH restrictions for a scheduled UL transmission depending on the duplexing mode the gNB operates for the corresponding PUSCH duration. In one example UE applies a first set of LCH restrictions for an UL transmission in response to determining that the gNB operates in FD mode for the corresponding PUSCH duration, whereas the UE applies a second set of LCH restrictions for a PUSCH transmission in response to determining that gNB operates in a non-FD mode for the corresponding PUSCH duration.

According to second embodiment, an LCH/radio bearer of a UE is configured with a parameter indicating which duplex mode is supported by this LCH/radio bearer. In one example a new parameter/field is configured per logical channel /radio bearer, e.g., in *logicalchannelconfig* IE, which indicates whether data of this LCH/radio bearer is allowed to be multiplexed in a PUSCH which is sent in a slot which gNB operates in FD mode, i.e., simultaneous downlink transmission.

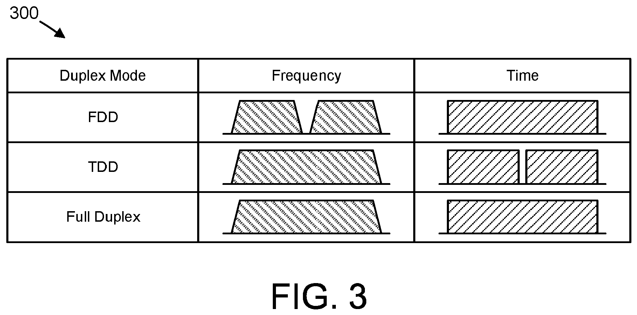

Figure 3 depicts examples of different duplexing modes and corresponding frequency and time use. For frequency-division duplexing ("FDD") mode, a first portion of the frequency band is used for uplink ("UL") transmission and a second portion of the frequency band is used for downlink ("DL") transmission. For pure FDD mode no distinction is made in the time domain between UL and DL transmissions, meaning that UL and DL transmissions may be performed simultaneously using the same time resources. Note that a duplex gap (i.e., guard band) exists in the frequency band separating UL frequencies from DL frequencies (i.e., preventing inter-carrier interference).

For TDD mode, a first portion of the time domain (i.e., a first time slot or first set of time slots) is used for uplink ("UL") transmission and a second portion of the time domain (i.e., a second time slot or second set of time slots) is used for downlink ("DL") transmission. For pure TDD mode no distinction is made in the frequency domain between UL and DL transmissions, meaning that UL and DL transmissions may be performed across the entire frequency band, i.e., using the same frequency resources. Note that a guard period (i.e., time gap) exists in the time domain separating UL time slots from DL time slots (i.e., preventing inter-slot interference). Also note that some wireless communication systems employ combinations of FDD and TDD principles, i.e., separating UL and DL transmissions in both time and frequency.

FDD and TDD are examples of half-duplex operation. In contrast thereto, for Full Duplex ("FD") mode UL and DL transmissions may be performed across the entire frequency band, i.e., using the same frequency resources, and also using the same time resources. FD operation is characterized by the capability to concurrently transmit and receive at the same time and same frequency resources, which is facilitated by the means of self-interference cancellation ("SIC") at an FD node. In contrast, half-duplex operation provides, e.g., communication in both directions, but only one direction at a time (i.e., TDD), not simultaneously in both directions.

The Logical Channel Prioritization ("LCP") procedure is applied whenever a new transmission is performed. An RRC entity (i.e., at the RRC layer 221) controls the scheduling of uplink data by signaling the following parameters for each logical channel per MAC entity: Parameter *priority,* where an increasing priority value indicates a lower priority level; Parameter *prioritisedBitRate,* which sets the Prioritized Bit Rate ("PBR"); Parameter *bucketSizeDuration,* which sets the Bucket Size Duration ("BSD").

The RRC entity additionally controls the LCP procedure by configuring mapping restrictions for each logical channel, including the following parameters: Parameter *allowedSCS-List* which sets the allowed Subcarrier Spacing(s) for transmission; Parameter *maxPUSCH-Duration* which sets the maximum PUSCH duration allowed for transmission; Parameter *configuredGrantTypeIAllowed* which sets whether a Configured Grant ("CG") Type-1 can be used for transmission; Parameter *allowedServingCells* which sets the allowed cell(s) for transmission; Parameter *allowedCG-List* which sets the allowed configured grant(s) for transmission; Parameter *allowedPHY-PriorityIndex* which sets the allowed PHY priority index(es) of a dynamic grant for transmission.

The Logical channel prioritization procedure also uses the UE variable $B_j$, which is maintained for each logical channel *j*. A MAC entity (i.e., at the MAC layer 213) shall initialize $B_j$ of the logical channel to zero when the logical channel is established.

For each logical channel *j*, the MAC entity shall: A) increment $B_j$ by the product PBR × T before every instance of the LCP procedure, where T is the time elapsed since $B_j$ was last incremented; and B) set $B_j$ to the bucket size, if the value of $B_j$ is greater than the bucket size (i.e., PBR × BSD).

Note that the exact moment(s) when the UE updates $B_j$ between LCP procedures is up to UE implementation, as long as $B_j$ is up to date at the time when a grant is processed by LCP.

Regarding the selection of logical channels, when a new transmission is performed, the MAC entity shall select the logical channels for each UL grant that satisfy all the following conditions: 1) the set of allowed Subcarrier Spacing ("SCS") index values in *allowedSCS-List,* if configured, includes the Subcarrier Spacing index associated to the UL grant; and 2) *maxPUSCH-Duration,* if configured, is larger than or equal to the PUSCH transmission duration associated to the UL grant; and 3) *configuredGrantTypeIAllowed,* if configured, is set to *true* in case the UL grant is a Configured Grant ("CG") Type 1; and 4) *allowedServingCells,* if configured, includes the Cell information associated to the UL grant (note, this does not apply to logical channels associated with a DRB configured with PDCP duplication within the same MAC entity (i.e., CA duplication) when CA duplication is deactivated for this Data Radio Bearer ("DRB") in this MAC entity); and 5) *allowedCG-List,* if configured, includes the configured grant index associated to the UL grant; and 6) *allowedPHY-PriorityIndex,* if configured, includes the priority index (as specified in clause 9 of 3GPP Technical Specification ("TS") 38.213) associated to the dynamic UL grant.

Note that the Subcarrier Spacing index, the PUSCH transmission duration, the Cell information, and the priority index are included in Uplink transmission information received from lower layers for the corresponding scheduled uplink transmission.

Power control ("PC") and power headroom ("PHR") formulas that involve some aspects of bandwidth part ("BWP") operation is adopted for 5G operation. For example, per 3GPP TS 38.213, if a UE transmits a PUSCH on UL BWP *b* of carrier *f* of serving cell *c* using parameter set configuration with index *j* and PUSCH power control adjustment state with index *l,* the UE shall determine the PUSCH transmission power $P_{\text{PUSCH},b,f,c}(i, j, q_d, l)$ in PUSCH transmission period *i* as

$$P_{\text{PUSCH},b,f,c}(i,j,q_d,l) =$$

$$min \begin{cases} P_{\text{CMAX},f,c}(i), \\ P_{\text{O\_PUSCH},b,f,c}(j) + 10\,log_{10}(2^\mu \cdot M_{\text{RB},b,f,c}^{\text{PUSCH}}(i)) + \alpha_{b,f,c}(j) \cdot PL_{b,f,c}(q_d) + \Delta_{\text{TF},b,f,c}(i) + f_{b,f,c}(i,l) \end{cases}$$

where all parameters are defined in 3GPP TS 38.213. In particular, most PC parameters are configured per UL BWP, including: the UE-specific component of target power spectral density ("PSD") value *Po_UE;* fractional pathloss compensation factor \alpha; the pathloss ("PL") reference, the closed-loop power control ("CL-PC") process, and the transmission bandwidth (i.e., number of PRBs) allocation. However, the configured maximum UE transmit power, $Pcmax,f,c,$ and the nominal component of target PSD value, $Po\_nominal,$ are configured per UL carrier of a serving cell, but do not depend upon the choice of UL BWP.

Regarding RACH procedure, a valid PRACH occasion in unpaired spectrum may be defined as follows: For unpaired spectrum, if a UE is not provided *tdd-UL-DL-ConfigurationCommon,* then a PRACH occasion in a PRACH slot is valid if it does not precede a Synchronization Signal/Physical Broadcast Channel ("SS/PBCH") block in the PRACH slot and starts at least $N\_gap$ symbols after a last SS/PBCH block reception symbol, where $N\_gap$ is provided in Table 8.1-2 and, if *channelAccessMode* = 'semistatic' is provided, it does not overlap with a set of consecutive symbols before the start of a next channel occupancy time where the UE does not transmit (see 3GPP TS 37.213). Note that the candidate SS/PBCH block index of the SS/PBCH block corresponds to the SS/PBCH block index provided by *ssb-PositionsInBurst* in System Information Block #1 ("SIB1") or in *ServingCellConfigCommon,* as described in Clause 4.1 of 3GPP TS 38.213.

For unpaired spectrum, if a UE is provided *tdd-UL-DL-ConfigurationCommon,* then a PRACH occasion in a PRACH slot is valid if it is within UL symbols, or if itdoes not precede a SS/PBCH block in the PRACH slot and starts at least $N\_gap$ symbols after a last downlink symbol and at least $N\_gap$ symbols after a last SS/PBCH block symbol, where $N\_gap$ is provided in Table 8.1-2, and if *channelAccessMode* = 'semistatic' is provided, does not overlap with a set of consecutive symbols before the start of a next channel occupancy time where there shall not be any transmissions, as described in 3GPP TS 37.213. Note that the candidate SS/PBCH block index of the SS/PBCH block corresponds to the SS/PBCH block index provided by *ssb-PositionsInBurst* in SIB1 or in *ServingCellConfigCommon,* as described in Clause 4.1 of 3GPP TS 38.213.

It should be noted that throughout the disclosure, the terms "symbol," "time slot," "slot," "subslot," and "transmission time interval" refer to a time unit with a particular duration. For example, "symbol" may refer to a fraction/percentage of an Orthogonal Frequency Division Multiplexing ("OFDM") symbol length associated with a particular Subcarrier Spacing ("SCS"). In the following, an UL transmission (UL transmission burst) can be comprised of multiple transmissions (e.g., of the same/different priority in case a priority is associated with the transmissions).

According to embodiments of a first solution, a UE may apply a different set of Logical Channel ("LCH") restriction configurations for a scheduled UL transmission depending on the duplexing mode (or generally, an indication, or LCH/radio bearer mapping mode/type) indicated by the gNB operates for the set (or subset) of symbols where the uplink transmission takes place, e.g., PUSCH duration. In one example, the UE applies a first set of LCH restrictions for an UL transmission in response to determining that the gNB operates in full duplex ("FD") mode (or the UE receives an indication of a first mapping mode/type) for the corresponding PUSCH duration, whereas the UE applies a second set of LCH restrictions for a PUSCH transmission in response to determining that the gNB operates in a non-FD mode (or UE receives an indication of a second mapping mode/type) for the corresponding PUSCH duration.

In some examples, a full duplex mode may comprise the gNB operating with flexible or variable duplex operation, e.g., where the duplex Tx-Rx carrier center frequency separation between any pair of transmit ("Tx") channel and receive ("Rx") channel the gNB is operating is smaller than a nominal value or Default Tx-Rx carrier center frequency separation for an operating band. For a UE, the Tx-Rx carrier center frequency separation is at least the default Tx channel (carrier center frequency) to Rx channel (carrier center frequency) separation for the operating band (e.g., as specified in 3GPP TS 38.101). In other examples, a full duplex mode may comprise the gNB operating a carrier to simultaneous receive uplink on a first frequency portion (e.g., BWP) of the carrier and transmit on a second frequency portion (e.g., BWP) of the carrier. The separation between the first frequency portion and the second frequency portion may be smaller than a threshold.

One motivation of using a different set of LCH restriction configurations for different duplex modes (i.e., Full-Duplex and Half-Duplex), is to impose restrictions on the UE's uplink transmissions parameters, such as allowed SCS, maximum PUSCH duration, logical channel priority, etc. in order to control which LCHs UE is allowed to multiplex in a PUSCH transmission in order not to compromise the perceived Quality of Service ("QoS") of an UL transmission due to the increased interference caused by a full duplex operation at the network entity, e.g., the gNB. When a network entity operates in a full duplex mode by scheduling or configuring a first UE to transmit UL signal/channel and scheduling a second UE to receive DL signal/channel, the UL signal/channel at a receiver of the network entity may suffer from significant self-interference caused by a transmitter of the network entity.

In one example, the UE may be configured to avoid multiplexing traffic which requires a high reliability (such as Ultra-Reliable and Low-Latency Communications ("URLLC") data) in a PUSCH transmission which is transmitted on a set of symbols which are operated in a full duplex mode at the gNB side. Since an interference level for full duplex operation at the network entity may be different from an interference level for half-duplex operation at the network entity the supported QoS may be lower for full duplex symbols/slots compared to non-FD slots.

A UE may determine the duplex mode/state/mapping mode of a symbol/slot (e.g., Full-Duplex and Half-Duplex modes) based on, e.g., some explicit signaling/indication received from the gNB. In one embodiment, the gNB indicates to the UE a set of time instances (such as slots/symbols) in which the gNB may operate in FD mode. In one example the Downlink Control Information ("DCI") scheduling a PUSCH transmission indicates whether the gNB operates the corresponding symbols/slot(s) where the PUSCH transmission takes place in Full-Duplex mode or in non-FD mode.

In another implementation the DCI indicates which set of LCH restrictions to use for a corresponding PUSCH transmission. In one example a one-bit flag is used within the DCI to indicate which of the two sets of LCH restriction parameter/configurations to use for the associated PUSCH transmission. This mechanism allows the gNB to dynamically switch between different, i.e., two, LCH restriction configuration sets.

Similar to a dynamically scheduled PUSCH transmission UE may apply a different set of LCH restriction configurations for cases when a configured uplink transmission happens to occur on (a set of) symbols/PRBs which are operated in a FD mode by the gNB, i.e., the gNB performs DL transmission(s) on at least one of the symbols/PRBs used for CG PUSCH. In one example UE may apply a different set of LCH restrictions/configuration for FD slots such that LCHs which have a high reliability requirement are not allowed to be multiplexed to the configured uplink grant.

According to one further embodiment, an uplink configured grant configuration is comprised more than one transport block size parameter, each of the more than one configured transport block sizes are associated with a duplex mode/state/mapping mode. In one example UE shall apply a first configured transport block size ("TBS") and/or Modulation Coding Scheme ("MCS") for cases when for cases when a configured uplink transmission happens to occur on (a set of) symbols/PRBs which are operated in a FD mode by the gNB, i.e., the gNB performs DL transmission(s) on at least one of the symbols/PRBs used for CG PUSCH, whereas UE applies a second configured transport block size and/or MCS for cases when a configured uplink transmission happens to occur on (a set of) symbols/PRBs which are operated in a non-FD mode by the gNB. In one implementation UE is configured with multiple *mcsAndTBS* fields/parameter in the IE *ConfiguredGrantConfig,* e.g., one for FD mode and one for non-FD mode.

According to a further embodiment, an LCH/radio bearer is configured with a parameter indicating which duplex mode (or mapping mode) is supported by this LCH/radio bearer. In one example a new parameter/field is configured per logical channel /radio bearer, e.g., in the *logicalchannelconfig* IE, which indicates whether data of this LCH/radio bearer is allowed to be multiplexed in a PUSCH/TB which is sent in a set of symbols/slot/PUSCH duration which the gNB operates in FD mode, i.e., simultaneous downlink transmission on at least one of the symbols/slots. This new field may indicate whether an LCH/radio bearer supports FD mode of operation. In one example, when the parameter/field is not configured for the LCH/radio bearer, the data of this LCH/radio bearer is allowed to be multiplexed in the PUSCH/TB when the gNB operates in any duplex or mapping mode.

According to another embodiment, UE is not allowed to multiplex MAC Control Elements ("CEs") in a PUSCH transmission which is transmitted in symbols/slot/PUSCH duration which is operated in FD mode. In one example UE considers only uplink shared channel ("UL-SCH") resources scheduled in symbols/slots which are indicated by the gNB to as non-full duplex as valid UL-SCH resources for the transmission of MAC CEs. For example, for the case of Carrier Aggregation ("CA"), where UE has multiple UL resource allocations concurrently on different serving cells, UE shall multiplex MAC CEs - if triggered - on a PUSCH for a serving cell which is indicated as not being operated in FD mode.

When a network entity operates in full duplex mode by scheduling a first UE to transmit UL signal/channel and scheduling a second UE to receive DL signal/channel, the UL signal/channel at a receiver of the network entity may suffer from significant self-interference caused by a transmitter of the network entity. Thus, the achievable UL data rate may be lower compared to the half duplex case.

According to embodiments of a second solution which does not fall within the scope of the appended claims, the UE may apply a different Power control ("PC") parameter set (i.e., open-loop, pathloss reference, and closed-loop configurations) for a scheduled UL transmission depending on the duplexing mode the gNB operates the corresponding slot/PUSCH duration. In one example UE applies a first PC parameter set for an UL transmission in response to determining that the gNB operates the slot(s) where the corresponding PUSCH transmission occurs in FD mode, whereas the UE applies a second set PC parameter set in response to determining that the slot(s) of the PUSCH transmission is operated by the gNB in a non-FD mode.

In one example different PC parameter (at least, different open-loop parameters and/or pathloss references) are configured for different duplex modes. When a gNB intends to operate different slots in different duplex modes, the UE may be configured with different open-loop power control parameters, e.g., different target power spectral density Po and fractional pathloss compensation factor alpha due to possibly different interference levels for the duplex modes, and possibly different closed-loop power control loops.

According to another embodiment which does not fall within the scope of the appended claims, the UE applies a power offset for uplink transmissions, e.g., PUSCH, and/or Sounding Reference Signal ("SRS") and/or PUCCH (referred to as PUSCH/SRS/PUCCH), which occur in symbols/slot(s) which are indicated by the gNB to be operated in FD mode. Such power offset may be predefined/preconfigured or indicated explicitly, e.g., together with the indication that certain symbols/slot(s) are being operated by the gNB in FD mode. The offset may be positive, boosting the uplink transmission power, or negative, i.e., reducing the uplink transmission power in order to limit interference to concurrent DL transmissions. There may be separate power offsets defined and/or configured and/or signaled for different UL channels, e.g., PUSCH/SRS/PUCCH.

According to another embodiment which does not fall within the scope of the appended claims, the UE determines the duplex mode/state of a symbol/set of symbols/slot at some predefined specific time instance, e.g., PDCCH occasion/slot where a first UL grant for a new transmission is received since PHR has been triggered or some predefined time (e.g., PUSCH preparation time) before an CG UL resource used for PHR transmission/calculation, in order to determine whether a PHR is calculated based on power control parameters used for FD mode or non-FD mode. In one example, the UE considers for a PHR calculation in slot/symbol $N$ all control signaling received until $N$-Tpredefined in order to determine whether slot/symbol $N$ is operated in FD mode or non-FD mode by the gNB for the calculation of a PHR. Because the UE cannot reliably predict the duplex state/mode for the time/slot for which a PHR is reported, the UE will according to this embodiment determine the duplex mode/state of a slot and hence the power control parameters to be used for PHR calculation based on information received until a predefined time before the slot where PHR is being reported.

In one example, in current symbol/slot $n$, if the slot would be a FD slot considering grants/control signaling received until Tprocess,2 prior to slot/symbol $n$, the UE shall apply the power control parameters configured for FD operation.

When a UE transmits an uplink channel/signal in symbols indicated as flexible or downlink (e.g., the gNB operating in full FD mode), the Signal-to-Interference and Noise Ratio ("SINR") of the uplink channel/signal at a receiver of a network entity is likely to be very low due to potential DL transmission by the network entity. Thus, the UE may be configured to transmit the uplink channel/signal in symbols indicated as flexible or DL with higher transmit power based on a larger 'Po' value and/or a larger 'alpha' value. Further, the UE may be configured to maintain a separate power control adjustment state(s) for transmission in symbols indicated as flexible or DL (e.g., for FD mode) or to reset a power control adjustment state whenever switching between transmission in symbols indicated as flexible/DL and transmission in symbols indicated as UL occurs, since a co-channel interference level for full duplex operation at the network entity may be different from a co-channel interference level for half-duplex operation at the network entity.

According to embodiments of a third solution which does not fall within the scope of the appended claims, a UE may transmit a first RACH message during a set of symbols corresponding to a PRACH occasion in a full-duplex slot, even when slot format information indicates that the set of symbols are not uplink symbols.

In an implementation, a full duplex operation in a cell may be allowed for resources where Physical Random Access Channel ("PRACH") can be transmitted by one or more UEs in the cell. For example, for a set of symbols of a slot corresponding to a valid PRACH occasion (i.e., the set of symbols of the slot configured as UL symbols) the UE may detect a DCI format with an SFI-index field value indicating the set of symbols of the slot as downlink or flexible, i.e., the dynamically signaled slot format indicator ("SFI") for the slot overrides a semi-statically configured slot format of the slot, and the gNB operates the slot in full-duplex mode.

For the case that a set of symbols of a slot corresponding to a valid PRACH occasion is indicated as a FD slot, UE may transmit the PRACH with an additional power offset in order to compensate for the lower SINR at the gNB due to potential DL transmission(s) by the network entity. Similar to the additional power offset which is used for the 2-step Random-Access procedure (aka RACH procedure), i.e., *POWER_OFFSET_2STEP_RA*, a separate power offset for FD operation, e.g., *POWER_OFFSET_FullDuplex* is according to one implementation applied by UEs which transmit a PRACH in a slot/symbol(s) which is indicated by network as being operated in FD mode.

In another implementation, a separate power ramping factor is used for a Random Access Channel ("RACH") preamble transmission for cases when the symbols of a slot corresponding to a valid PRACH occasion is operated by the network entity, e.g., the gNB, in full-duplex mode.

In one embodiment, when a UE performs the PUSCH transmission of MsgA, i.e., the first message of a 2-step RACH procedure, in at least one symbol indicated as operated in full-duplex mode, e.g., indicated as downlink via a cell-specific (e.g., *tdd-UL-DL-ConfigurationCommon*) and additionally UE-specific (e.g., *tdd-UL-DL-ConfigurationDedicated*) RRC configuration or via a DCI, the UE applies an MCS value and alpha value separately predefined and/or separately configured for the MsgA-PUSCH transmission. According to current specification the IE MsgA-PUSCH-Config is used to specify the PUSCH allocation for MsgA in 2-step random access type procedure.

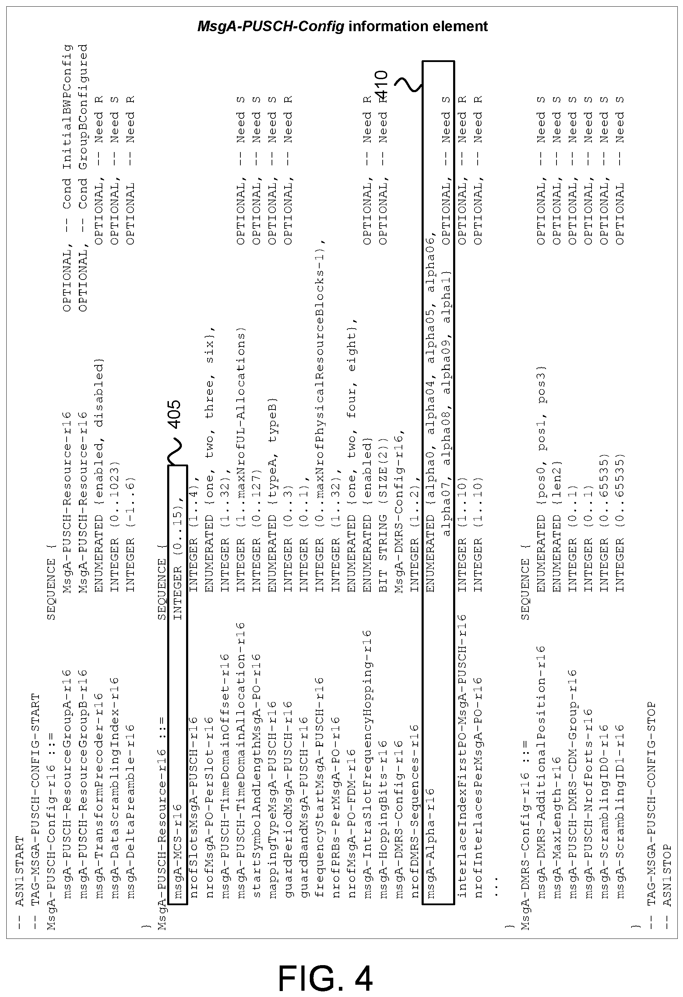

Figure 4 depicts an example of Abstract Syntax Notation One ("ASN.1") code for a *MsgA-PUSCH-Config* information element ("IE"). In one implementation the additional parameter *msgA-Alpha-fullduplex* 405 and *msgA-MCS-fullduplex* 410 are configured within the IE *MsgA-PUSCH-Config*, indicating the MCS and alpha value to use for cases when MsgA-PUSCH occurs in a slot/symbols which is operated in FD mode by the gNB (e.g., on at least one symbol of the slot/symbols).

In one embodiment, for a contention-free random access procedure in response to UE's detection of a PDCCH order, the UE may receive an indication to use a supplementary PRACH occasion for the contention-free random access procedure, where the supplementary PRACH occasion is a PRACH occasion including at least one flexible or DL symbol configured by *tdd-UL-DL-ConfigurationCommon* for unpaired spectrum or a PRACH occasion within a DL carrier for paired spectrum. For example, when a network entity has urgent DL data to transmit to a UE that is not uplink synchronized and if a Synchronization Signal Block ("SSB") to PRACH association period (i.e., the smallest number of PRACH configuration periods within which SS/PBCH block indexes are mapped at least once to the PRACH occasions) is set to be long, the network entity may schedule the UE with a PRACH transmission on a supplementary PRACH occasion. The network entity may dynamically associate an SSB with a given supplementary PRACH occasion instead of configuring a semi-static association pattern between SSB indexes and supplementary PRACH occasions.

In one implementation, a UE may determine a plurality of supplementary PRACH occasions within a PRACH configuration period (e.g., 10, 20, 40, 80, or 160 ms) and further determine a plurality of subsets of supplementary PRACH occasions within the PRACH configuration period, based on a received PRACH configuration index, semi-static/cell-specific slot format configuration (provided by *tdd-UL-DL-ConfigurationCommon*), semi-static/cell-specific SSB positions (provided by *ssb-PositionsInBurst*), and the number of subsets of supplementary PRACH occasions within the PRACH configuration period. In a PDCCH order triggering a contention-free random access procedure, the UE may receive information of a subset of supplementary PRACH occasions where the UE can transmit a contention-free PRACH preamble. In this case, the SS/PBCH index in the PDCCH order is not used for determining a PRACH occasion but may be used for determining parameter *referenceSignalPower* for pathloss estimation (in case SSBs are transmitted with different transmit power).

In one example, if a Cyclic Redundancy Check ("CRC") of DCI format 1_0 is scrambled by Cell-Radio Network Temporary Identifier ("C-RNTI") and the "Frequency domain resource assignment" field are of all ones, the DCI format 1_0 is for random access procedure initiated by a PDCCH order, with fields set as follows:

• Identifier for DCI formats - 1 bits

• The value of this bit field is always set to 1, indicating a DL DCI format

• Frequency domain resource assignment - bits where is given by clause 7.3.1.0

• Random Access Preamble index - 6 bits according to ra-*PreambleIndex* in Clause 5.1.2 of 3GPP TS 38.321

• UL/SUL indicator - 1 bit. If the value of the "Random Access Preamble index" is not all zeros and if the UE is configured with *supplementaryUplink* in *ServingCellConfig* in the cell, this field indicates which UL carrier in the cell to transmit the PRACH (e.g., according to Table 7.3.1.1.1-1); otherwise, this field is reserved. Here "SUL" refers to Supplementary Uplink, i.e., where the UE is configured with 2 UL carriers for one DL carrier of the same cell

• SS/PBCH index - 6 bits. If the value of the "Random Access Preamble index" is not all zeros, this field indicates the SS/PBCH that shall be used to determine the RACH occasion and/or *referenceSignalPower* for the PRACH transmission; otherwise, this field is reserved.

• PRACH Mask index - 4 bits. If the value of the "Random Access Preamble index" is not all zeros, this field indicates the PRACH occasion associated with the SS/PBCH indicated by "SS/PBCH index" for the PRACH transmission; otherwise, this field is reserved. Table 1, below, shows an example of mapping between the value of the "PRACH Mask index" and the allowed PRACH occasion(s).

• Reserved bits - 12 bits for operation in a cell with shared spectrum channel access; otherwise, 10 bits

**Table 1: Example of Modified PRACH Mask Index values**

| PRACH Mask Index/ *msgA-SSB-SharedRO-MaskIndex* | Allowed PRACH occasion(s) of SSB |
|---|---|
| 0 | All |
| 1 | PRACH occasion index 1 |
| 2 | PRACH occasion index 2 |
| 3 | PRACH occasion index 3 |
| 4 | PRACH occasion index 4 |
| 5 | PRACH occasion index 5 |
| 6 | PRACH occasion index 6 |
| 7 | PRACH occasion index 7 |
| 8 | PRACH occasion index 8 |
| 9 | Every even PRACH occasion |
| 10 | Every odd PRACH occasion |
| 11 | Supplementary PRACH occasion group 1 |
| 12 | Supplementary PRACH occasion group 2 |
| 13 | Supplementary PRACH occasion group 3 |
| 14 | Supplementary PRACH occasion group 4 |

(continued)

| PRACH Mask Index/ *msgA-SSB-SharedRO-MaskIndex* | Allowed PRACH occasion(s) of SSB |
|---|---|
| 15 | Reserved |

In an implementation, when a UE transmits a PUCCH of a higher priority index or a PUCCH with HARQ-ACK information in the gNB's FD slot, the UE may perform PUCCH repetition/spreading in frequency domain, if configured (or if dynamically indicated).

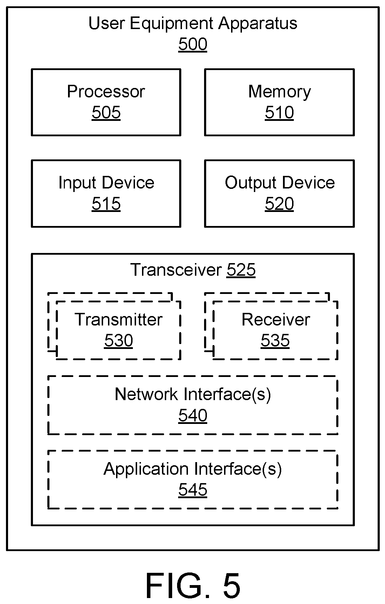

Figure 5 depicts a user equipment apparatus 500 that may be used for selecting an uplink transmission parameter based on duplex mode, according to embodiments of the disclosure. In various embodiments, the user equipment apparatus 500 is used to implement one or more of the solutions described above. The user equipment apparatus 500 may be one embodiment of the remote unit 105 and/or the UE 205, as described above. Furthermore, the user equipment apparatus 500 may include a processor 505, a memory 510, an input device 515, an output device 520, and a transceiver 525.

In some embodiments, the input device 515 and the output device 520 are combined into a single device, such as a touchscreen. In certain embodiments, the user equipment apparatus 500 may not include any input device 515 and/or output device 520. In various embodiments, the user equipment apparatus 500 may include one or more of: the processor 505, the memory 510, and the transceiver 525, and may not include the input device 515 and/or the output device 520.

As depicted, the transceiver 525 includes at least one transmitter 530 and at least one receiver 535. In some embodiments, the transceiver 525 communicates with one or more cells (or wireless coverage areas) supported by one or more base units 121. In various embodiments, the transceiver 525 is operable on unlicensed spectrum. Moreover, the transceiver 525 may include multiple UE panels supporting one or more beams. Additionally, the transceiver 525 may support at least one network interface 540 and/or application interface 545. The application interface(s) 545 may support one or more APIs. The network interface(s) 540 may support 3GPP reference points, such as Uu, N1, PC5, etc. Other network interfaces 540 may be supported, as understood by one of ordinary skill in the art.

The processor 505, in one embodiment, may include any known controller capable of executing computer-readable instructions and/or capable of performing logical operations. For example, the processor 505 may be a microcontroller, a microprocessor, a central processing unit ("CPU"), a graphics processing unit ("GPU"), an auxiliary processing unit, a field programmable gate array ("FPGA"), or similar programmable controller. In some embodiments, the processor 505 executes instructions stored in the memory 510 to perform the methods and routines described herein. The processor 505 is communicatively coupled to the memory 510, the input device 515, the output device 520, and the transceiver 525.

In various embodiments, the processor 505 controls the user equipment apparatus 500 to implement the above described UE behaviors. In certain embodiments, the processor 505 may include an application processor (also known as "main processor") which manages application-domain and operating system ("OS") functions and a baseband processor (also known as "baseband radio processor") which manages radio functions.

In various embodiments, via the transceiver 525, the processor 505 receives a configuration containing: A) a first set of LCH restriction configurations, and B) a second set of LCH restriction configurations different than the first set of logical channel restriction configurations. The transceiver 525 receives an uplink resource allocation from a network entity (e.g., a gNB) and the processor 505 determines a duplex mode corresponding to the uplink resource allocation, where the uplink resource allocation indicates uplink resources for an initial PUSCH transmission.

The processor 505 generates a TB corresponding to the uplink resource allocation and the transceiver 525 transmits the generated TB on the allocated uplink resources. If the PUSCH is to be transmitted in a set of symbols indicated as being operated in a first duplex mode, then the processor 505 generates the TB using the first set of LCH restriction configurations. However, if the PUSCH is to be transmitted in a set of symbols having at least one symbol indicated as being operated in a second duplex mode, then the processor 505 generates the TB using the second set of LCH restriction configurations.

In some embodiments, the first duplex mode corresponds to a full duplex mode and the second duplex mode corresponds to a non-full duplex mode. In certain embodiments, for the first duplex mode, at least one symbol of the set of symbols allocated in the uplink resource allocation is indicated as downlink according to the slot format information. In certain embodiments, the second set of LCH restriction configurations supports a higher level of QoS than the first set of LCH restriction configurations.

In certain embodiments, the first set of LCH restriction configurations includes a restriction against multiplexing data of certain logical channels. In such embodiments, the transceiver 525 may further receive a parameter indicating whether a particular LCH is allowed to be multiplexed in a TB when the network entity operates in full duplex mode. In one embodiment, the UE is not allowed to multiplex URLLC data when the PUSCH duration is operated in FD mode. In certain embodiments, multiplexing a MAC CE into the TB is not allowed when the PUSCH is to be transmitted in a set of symbols indicated as being operated in a first duplex mode.

In some embodiments, receiving the uplink resource allocation includes receiving DCI scheduling the PUSCH transmission. In certain embodiments, determining the duplex mode corresponding to the uplink resource allocation includes receiving, in the DCI, an indication of the duplex mode. In certain embodiments, determining the duplex mode corresponding to the uplink resource allocation includes receiving, in the DCI, an indication of which set of LCH restriction configurations to use.

In some embodiments, the received configuration further includes a first power control parameter set and a second power control parameter set. In such embodiments, transmitting the generated TB on the allocated uplink resources further includes: A) applying the first power control parameter set when the PUSCH is to be transmitted in a set of symbols indicated as being operated in the first duplex mode; and B) applying the second power control parameter set when the PUSCH is to be transmitted in a set of symbols having at least one symbol indicated as being operated in the second duplex mode.

In some embodiments, transmitting the generated TB on the allocated uplink resources includes applying a predetermined power offset when the PUSCH is to be transmitted in a set of symbols predicted as being operated in the first duplex mode.

In various embodiments, the processor 505 identifies a set of symbols of a slot corresponding to a PRACH occasion and detects overriding slot format information of the set of symbols. Here, the overriding slot format information (e.g., DCI with SFI-index field) indicates that the set of symbols are not uplink symbols (e.g., the SFI-index field value indicates the set of symbols as DL or flexible). The processor 505 determines whether the set of symbols corresponds to a full-duplex slot and controls the transceiver 525 to transmit a first RACH message (e.g., MsgA or Msg1/PRACH preamble) during the PRACH occasion when the set of symbols corresponds to a full-duplex slot.

In some embodiments, transmitting the first RACH message includes applying an additional power offset when the set of symbols corresponds to a full-duplex slot. In some embodiments, the transceiver 525 further receives a configuration that contains a first power ramping factor for use when the set of symbols corresponds to a full-duplex slot and a second power ramping factor for use when the set of symbols corresponds to a non-full-duplex slot. In such embodiments, transmitting the first RACH message includes applying the first power ramping factor.

In some embodiments, the first RACH message includes a MsgA of a two-step RACH procedure. In such embodiments, the processor 505 further applies a separate predetermined (i.e., predefined or preconfigured) MCS value and alpha value to the MsgA when the set of symbols corresponds to a full-duplex slot. In some embodiments, the transceiver 525 further receives a PDCCH order for contention-free RACH procedure prior to transmitting the first RACH message, where the PDCCH order includes an indication to use a supplementary PRACH occasion that includes at least one flexible symbol and/or downlink symbol.

The memory 510, in one embodiment, is a computer readable storage medium. In some embodiments, the memory 510 includes volatile computer storage media. For example, the memory 510 may include a RAM, including dynamic RAM ("DRAM"), synchronous dynamic RAM ("SDRAM"), and/or static RAM ("SRAM"). In some embodiments, the memory 510 includes non-volatile computer storage media. For example, the memory 510 may include a hard disk drive, a flash memory, or any other suitable non-volatile computer storage device. In some embodiments, the memory 510 includes both volatile and non-volatile computer storage media.

In some embodiments, the memory 510 stores data related to selecting an uplink transmission parameter based on duplex mode. For example, the memory 510 may store various parameters, panel/beam configurations, resource assignments, policies, and the like as described above. In certain embodiments, the memory 510 also stores program code and related data, such as an operating system or other controller algorithms operating on the apparatus 500.

The input device 515, in one embodiment, may include any known computer input device including a touch panel, a button, a keyboard, a stylus, a microphone, or the like. In some embodiments, the input device 515 may be integrated with the output device 520, for example, as a touchscreen or similar touch-sensitive display. In some embodiments, the input device 515 includes a touchscreen such that text may be input using a virtual keyboard displayed on the touchscreen and/or by handwriting on the touchscreen. In some embodiments, the input device 515 includes two or more different devices, such as a keyboard and a touch panel.

The output device 520, in one embodiment, is designed to output visual, audible, and/or haptic signals. In some embodiments, the output device 520 includes an electronically controllable display or display device capable of outputting visual data to a user. For example, the output device 520 may include, but is not limited to, a Liquid Crystal Display ("LCD"), a Light-Emitting Diode ("LED") display, an Organic LED ("OLED") display, a projector, or similar display device capable of outputting images, text, or the like to a user. As another, non-limiting, example, the output device 520 may include a wearable display separate from, but communicatively coupled to, the rest of the user equipment apparatus 500, such as a smart watch, smart glasses, a heads-up display, or the like. Further, the output device 520 may be a component of a smart phone, a personal digital assistant, a television, a table computer, a notebook (laptop) computer, a personal computer, a vehicle dashboard, or the like.

In certain embodiments, the output device 520 includes one or more speakers for producing sound. For example, the output device 520 may produce an audible alert or notification (e.g., a beep or chime). In some embodiments, the output device 520 includes one or more haptic devices for producing vibrations, motion, or other haptic feedback. In some embodiments, all or portions of the output device 520 may be integrated with the input device 515. For example, the input device 515 and output device 520 may form a touchscreen or similar touch-sensitive display. In other embodiments, the output device 520 may be located near the input device 515.

The transceiver 525 communicates with one or more network functions of a mobile communication network via one or more access networks. The transceiver 525 operates under the control of the processor 505 to transmit messages, data, and other signals and also to receive messages, data, and other signals. For example, the processor 505 may selectively activate the transceiver 525 (or portions thereof) at particular times in order to send and receive messages.

The transceiver 525 includes at least transmitter 530 and at least one receiver 535. One or more transmitters 530 may be used to provide UL communication signals to a base unit 121, such as the UL transmissions described herein. Similarly, one or more receivers 535 may be used to receive DL communication signals from the base unit 121, as described herein. Although only one transmitter 530 and one receiver 535 are illustrated, the user equipment apparatus 500 may have any suitable number of transmitters 530 and receivers 535. Further, the transmitter(s) 530 and the receiver(s) 535 may be any suitable type of transmitters and receivers. In one embodiment, the transceiver 525 includes a first transmitter/receiver pair used to communicate with a mobile communication network over licensed radio spectrum and a second transmitter/receiver pair used to communicate with a mobile communication network over unlicensed radio spectrum.

In certain embodiments, the first transmitter/receiver pair used to communicate with a mobile communication network over licensed radio spectrum and the second transmitter/receiver pair used to communicate with a mobile communication network over unlicensed radio spectrum may be combined into a single transceiver unit, for example a single chip performing functions for use with both licensed and unlicensed radio spectrum. In some embodiments, the first transmitter/receiver pair and the second transmitter/receiver pair may share one or more hardware components. For example, certain transceivers 525, transmitters 530, and receivers 535 may be implemented as physically separate components that access a shared hardware resource and/or software resource, such as for example, the network interface 540.

In various embodiments, one or more transmitters 530 and/or one or more receivers 535 may be implemented and/or integrated into a single hardware component, such as a multi-transceiver chip, a system-on-a-chip, an Application-Specific Integrated Circuit ("ASIC"), or other type of hardware component. In certain embodiments, one or more transmitters 530 and/or one or more receivers 535 may be implemented and/or integrated into a multi-chip module. In some embodiments, other components such as the network interface 540 or other hardware components/circuits may be integrated with any number of transmitters 530 and/or receivers 535 into a single chip. In such embodiment, the transmitters 530 and receivers 535 may be logically configured as a transceiver 525 that uses one more common control signals or as modular transmitters 530 and receivers 535 implemented in the same hardware chip or in a multi-chip module.

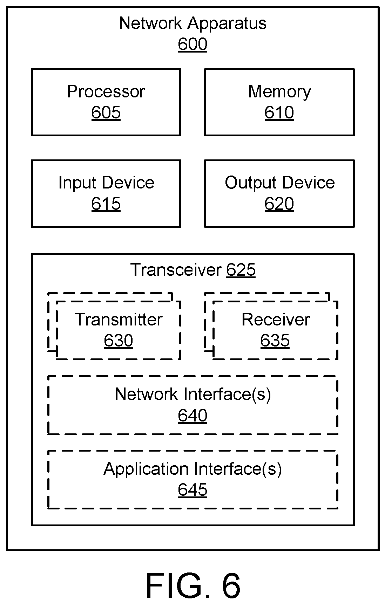

Figure 6 depicts a network apparatus 600 that may be used for selecting an uplink transmission parameter based on duplex mode, according to embodiments of the disclosure. In one embodiment, network apparatus 600 may be one implementation of a RAN device, such as the base unit 121 and/or RAN node 207, as described above. Furthermore, the network apparatus 600 may include a processor 605, a memory 610, an input device 615, an output device 620, and a transceiver 625.

In some embodiments, the input device 615 and the output device 620 are combined into a single device, such as a touchscreen. In certain embodiments, the network apparatus 600 may not include any input device 615 and/or output device 620. In various embodiments, the network apparatus 600 may include one or more of: the processor 605, the memory 610, and the transceiver 625, and may not include the input device 615 and/or the output device 620.

As depicted, the transceiver 625 includes at least one transmitter 630 and at least one receiver 635. Here, the transceiver 625 communicates with one or more remote units 105. Additionally, the transceiver 625 may support at least one network interface 640 and/or application interface 645. The application interface(s) 645 may support one or more APIs. The network interface(s) 640 may support 3GPP reference points, such as Uu, N1, N2 and N3. Other network interfaces 640 may be supported, as understood by one of ordinary skill in the art.

The processor 605, in one embodiment, may include any known controller capable of executing computer-readable instructions and/or capable of performing logical operations. For example, the processor 605 may be a microcontroller, a microprocessor, a CPU, a GPU, an auxiliary processing unit, a FPGA, or similar programmable controller. In some embodiments, the processor 605 executes instructions stored in the memory 610 to perform the methods and routines described herein. The processor 605 is communicatively coupled to the memory 610, the input device 615, the output device 620, and the transceiver 625.

In various embodiments, the network apparatus 600 is a RAN node (e.g., gNB) that communicates with one or more UEs, as described herein. In such embodiments, the processor 605 controls the network apparatus 600 to perform the above described RAN behaviors. When operating as a RAN node, the processor 605 may include an application processor (also known as "main processor") which manages application-domain and operating system ("OS") functions and a baseband processor (also known as "baseband radio processor") which manages radio functions.

In various embodiments, via the transceiver 625, the processor 605 transmits a configuration containing: A) a first set of LCH restriction configurations, and B) a second set of LCH restriction configurations different than the first set of logical channel restriction configurations. The transceiver 625 transmits an uplink resource allocation to a UE, said uplink resource allocation indicating uplink resources for an initial PUSCH transmission. The transceiver 625 receives a TB from the UE on the allocated uplink resources, where the TB is generated based on the first set of LCH restriction configurations when the PUSCH is transmitted in a set of symbols indicated as being operated in a first duplex mode, and where the TB is generated based on the second set of LCH restriction configurations when the PUSCH is transmitted in a set of symbols having at least one symbol indicated as being operated in a second duplex mode.

The first duplex mode corresponds to a full duplex mode and the second duplex mode corresponds to a non-full duplex mode. In certain embodiments, for the first duplex mode, at least one symbol of the set of symbols allocated in the uplink resource allocation is indicated as downlink according to the slot format information.

In certain embodiments, the second set of LCH restriction configurations supports a higher level of QoS than the first set of LCH restriction configurations. In certain embodiments, multiplexing a MAC CE into the TB is not allowed when the PUSCH is to be transmitted in a set of symbols indicated as being operated in a first duplex mode.

In certain embodiments, the first set of LCH restriction configurations includes a restriction against multiplexing data of certain logical channels. In one embodiment, the UE is not allowed to multiplex URLLC data when the PUSCH duration is operated in FD mode. In further embodiments, the third method includes transmitting a parameter indicating whether a particular LCH is allowed to be multiplexed in a TB when the network entity operates in full duplex mode.

In some embodiments, transmitting the uplink resource allocation includes transmitting DCI scheduling the PUSCH transmission. In certain embodiments, the third method may further include transmitting an indication of the duplex mode in the DCI. In certain embodiments, the third method may further include transmitting, in the DCI, an indication of which set of LCH restriction configurations to use.

In some embodiments, the transmitted configuration further includes: A) a first power control parameter set for use when the PUSCH is transmitted in a set of symbols indicated as being operated in a first duplex mode with; and B) a second power control parameter set for use when the PUSCH is transmitted in a set of symbols having at least one symbol indicated as being operated in a second duplex mode.

The memory 610, in one embodiment, is a computer readable storage medium. In some embodiments, the memory 610 includes volatile computer storage media. For example, the memory 610 may include a RAM, including dynamic RAM ("DRAM"), synchronous dynamic RAM ("SDRAM"), and/or static RAM ("SRAM"). In some embodiments, the memory 610 includes non-volatile computer storage media. For example, the memory 610 may include a hard disk drive, a flash memory, or any other suitable non-volatile computer storage device. In some embodiments, the memory 610 includes both volatile and non-volatile computer storage media.

In some embodiments, the memory 610 stores data related to selecting an uplink transmission parameter based on duplex mode. For example, the memory 610 may store parameters, configurations, resource assignments, policies, and the like, as described above. In certain embodiments, the memory 610 also stores program code and related data, such as an operating system or other controller algorithms operating on the apparatus 600.

The input device 615, in one embodiment, may include any known computer input device including a touch panel, a button, a keyboard, a stylus, a microphone, or the like. In some embodiments, the input device 615 may be integrated with the output device 620, for example, as a touchscreen or similar touch-sensitive display. In some embodiments, the input device 615 includes a touchscreen such that text may be input using a virtual keyboard displayed on the touchscreen and/or by handwriting on the touchscreen. In some embodiments, the input device 615 includes two or more different devices, such as a keyboard and a touch panel.

The output device 620, in one embodiment, is designed to output visual, audible, and/or haptic signals. In some embodiments, the output device 620 includes an electronically controllable display or display device capable of outputting visual data to a user. For example, the output device 620 may include, but is not limited to, an LCD display, an LED display, an OLED display, a projector, or similar display device capable of outputting images, text, or the like to a user. As another, non-limiting, example, the output device 620 may include a wearable display separate from, but communicatively coupled to, the rest of the network apparatus 600, such as a smart watch, smart glasses, a heads-up display, or the like. Further, the output device 620 may be a component of a smart phone, a personal digital assistant, a television, a table computer, a notebook (laptop) computer, a personal computer, a vehicle dashboard, or the like.

In certain embodiments, the output device 620 includes one or more speakers for producing sound. For example, the output device 620 may produce an audible alert or notification (e.g., a beep or chime). In some embodiments, the output device 620 includes one or more haptic devices for producing vibrations, motion, or other haptic feedback. In some embodiments, all or portions of the output device 620 may be integrated with the input device 615. For example, the input device 615 and output device 620 may form a touchscreen or similar touch-sensitive display. In other embodiments, the output device 620 may be located near the input device 615.

The transceiver 625 includes at least transmitter 630 and at least one receiver 635. One or more transmitters 630 may be used to communicate with the UE, as described herein. Similarly, one or more receivers 635 may be used to communicate with network functions in the Public Land Mobile Network ("PLMN") and/or RAN, as described herein. Although only one transmitter 630 and one receiver 635 are illustrated, the network apparatus 600 may have any suitable number of transmitters 630 and receivers 635. Further, the transmitter(s) 630 and the receiver(s) 635 may be any suitable type of transmitters and receivers.

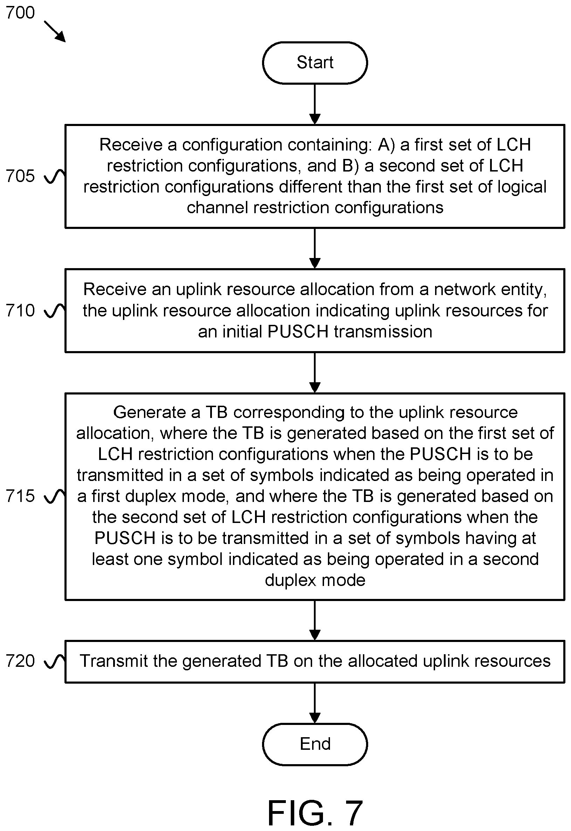

Figure 7 depicts one embodiment of a method 700 for selecting an uplink transmission parameter based on duplex mode, according to embodiments of the disclosure. In various embodiments, the method 700 is performed by a UE device, such as the remote unit 105, the UE 205, and/or the user equipment apparatus 500, described above as described above. In some embodiments, the method 700 is performed by a processor, such as a microcontroller, a microprocessor, a CPU, a GPU, an auxiliary processing unit, a FPGA, or the like.

The method 700 begins and receives 705 a configuration containing: A) a first set of LCH restriction configurations, and B) a second set of LCH restriction configurations different than the first set of logical channel restriction configurations. The method 700 includes receiving 710 an uplink resource allocation from a network entity (e.g., gNB), the uplink resource allocation indicating uplink resources for an initial PUSCH transmission. The method 700 includes generating 715 a TB corresponding to the uplink resource allocation, where the TB is generated based on the first set of LCH restriction configurations when the PUSCH is to be transmitted in a set of symbols indicated as being operated in a first duplex mode, and where the TB is generated based on the second set of LCH restriction configurations when the PUSCH is to be transmitted in a set of symbols having at least one symbol indicated as being operated in a second duplex mode. The method 700 includes transmitting 720 the generated TB on the allocated uplink resources. The method 700 ends.

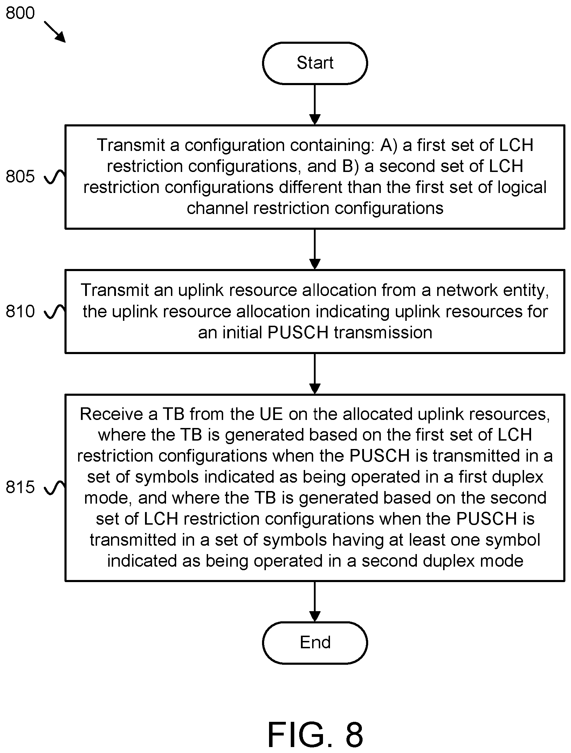

Figure 8 depicts one embodiment of a method 800 for selecting an uplink transmission parameter based on duplex mode, according to embodiments of the disclosure. In various embodiments, the method 800 is performed by a network entity, such as the base unit 121, the RAN node 207, and/or the network apparatus 600, described above as described above. In some embodiments, the method 800 is performed by a processor, such as a microcontroller, a microprocessor, a CPU, a GPU, an auxiliary processing unit, a FPGA, or the like.

The method 800 begins and transmits 805 a configuration containing: A) a first set of LCH restriction configurations, and B) a second set of LCH restriction configurations different than the first set of logical channel restriction configurations. The method 800 includes transmitting 810 an uplink resource allocation to a UE, the uplink resource allocation indicating uplink resources for an initial PUSCH transmission. The method 800 includes receiving 815 a TB from the UE on the allocated uplink resources, where the TB is generated based on the first set of LCH restriction configurations when the PUSCH is transmitted in a set of symbols indicated as being operated in a first duplex mode, and where the TB is generated based on the second set of LCH restriction configurations when the PUSCH is transmitted in a set of symbols having at least one symbol indicated as being operated in a second duplex mode. The method 800 ends.

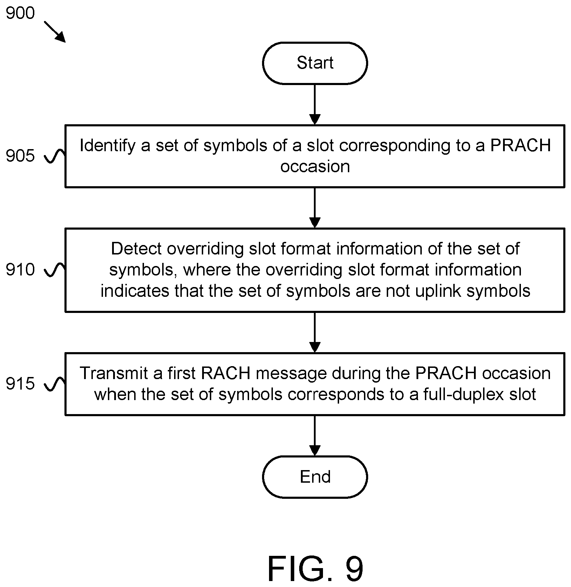

Figure 9 depicts one embodiment of a method 900 for selecting an uplink transmission parameter based on duplex mode, according to embodiments of the disclosure. In various embodiments, the method 900 is performed by a UE device, such as the remote unit 105, the UE 205, and/or the user equipment apparatus 500, described above as described above. In some embodiments, the method 900 is performed by a processor, such as a microcontroller, a microprocessor, a CPU, a GPU, an auxiliary processing unit, a FPGA, or the like.

The method 900 begins and identifies 905 a set of symbols of a slot corresponding to a PRACH occasion. The method 900 includes detecting 910 overriding slot format information (e.g., DCI with SFI-index) of the set of symbols, where the overriding slot format information indicates that the set of symbols are not uplink symbols (e.g., the SFI-index field value indicates the set of symbols as DL or flexible). The method 900 includes transmitting 915 a first RACH message (e.g., MsgA or Msg1/PRACH preamble) during the PRACH occasion when the set of symbols corresponds to a full-duplex slot. The method 900 ends.

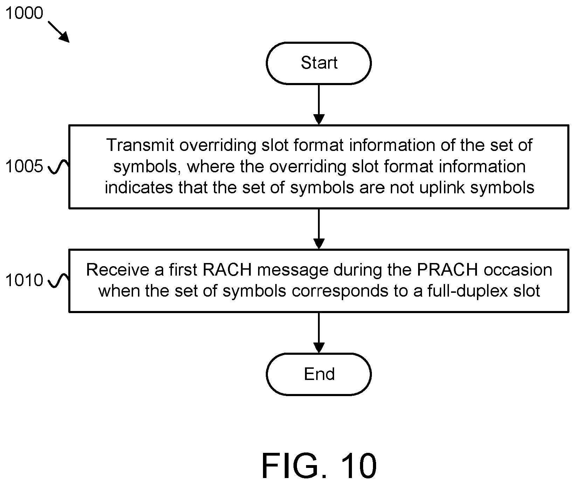

Figure 10 depicts one embodiment of a method 1000 for selecting an uplink transmission parameter based on duplex mode, according to embodiments of the disclosure. In various embodiments, the method 1000 is performed by a network entity, such as the base unit 121, the RAN node 207, and/or the network apparatus 600, described above as described above. In some embodiments, the method 1000 is performed by a processor, such as a microcontroller, a microprocessor, a CPU, a GPU, an auxiliary processing unit, a FPGA, or the like.

The method 1000 begins and transmit 1005 an overriding slot format information of the set of symbols, where the overriding slot format information (e.g., DCI with SFI-index field) indicates that the set of symbols are not uplink symbols (e.g., the SFI-index field value indicates the set of symbols as DL or flexible). The method 1000 includes receiving 1010 a first RACH message (e.g., MsgA or Msg1/PRACH preamble) from a UE during the PRACH occasion when the set of symbols corresponds to a full-duplex slot. The method 1000 ends.

Disclosed herein is a first apparatus for selecting an uplink transmission parameter based on duplex mode, according to embodiments of the disclosure. The first apparatus may be implemented by a UE device, such as the remote unit 105, the UE 205, and/or the user equipment apparatus 500, described above. The first apparatus includes a processor, a transmitter, and a receiver. The receiver receives a configuration containing: A) a first set of LCH restriction configurations, and B) a second set of LCH restriction configurations different than the first set of logical channel restriction configurations. The receiver receives an uplink resource allocation from a network entity (e.g., a gNB) and the determines a duplex mode corresponding to the uplink resource allocation, where the uplink resource allocation indicates uplink resources for an initial PUSCH transmission.

The processor generates a TB corresponding to the uplink resource allocation and the transmitter transmits the generated TB on the allocated uplink resources. The TB is generated based on the first set of LCH restriction configurations when the PUSCH is to be transmitted in a set of symbols indicated as being operated in a first duplex mode. The TB is generated based on the second set of LCH restriction configurations when the PUSCH is to be transmitted in a set of symbols having at least one symbol indicated as being operated in a second duplex mode.

In some embodiments, the first duplex mode corresponds to a full duplex mode and the second duplex mode corresponds to a non-full duplex mode. In certain embodiments, for the first duplex mode, at least one symbol of the set of symbols allocated in the uplink resource allocation is indicated as downlink according to the slot format information. In certain embodiments, the second set of LCH restriction configurations supports a higher level of QoS than the first set of LCH restriction configurations.

In certain embodiments, the first set of LCH restriction configurations includes a restriction against multiplexing data of certain logical channels. In such embodiments, the receiver may further receive a parameter indicating whether a particular LCH is allowed to be multiplexed in a TB when the network entity operates in full duplex mode. In one embodiment, the UE is not allowed to multiplex URLLC data when the PUSCH duration is operated in FD mode. In certain embodiments, multiplexing a MAC CE into the TB is not allowed when the PUSCH is to be transmitted in a set of symbols indicated as being operated in a first duplex mode.

In some embodiments, receiving the uplink resource allocation includes receiving DCI scheduling the PUSCH transmission. In certain embodiments, determining the duplex mode corresponding to the uplink resource allocation includes receiving, in the DCI, an indication of the duplex mode. In certain embodiments, determining the duplex mode corresponding to the uplink resource allocation includes receiving, in the DCI, an indication of which set of LCH restriction configurations to use.

In some embodiments, the received configuration further includes a first power control parameter set and a second power control parameter set. In such embodiments, transmitting the generated TB on the allocated uplink resources further includes: A) applying the first power control parameter set when the PUSCH is to be transmitted in a set of symbols indicated as being operated in the first duplex mode; and B) applying the second power control parameter set when the PUSCH is to be transmitted in a set of symbols having at least one symbol indicated as being operated in the second duplex mode.

In some embodiments, transmitting the generated TB on the allocated uplink resources includes applying a predetermined power offset when the PUSCH is to be transmitted in a set of symbols predicted as being operated in the first duplex mode.

Disclosed herein is a second apparatus for selecting an uplink transmission parameter based on duplex mode, according to embodiments of the disclosure. The second apparatus may be implemented by a UE device, such as the remote unit 105, the UE 205, and/or the user equipment apparatus 500, described above. The second apparatus includes a transceiver and a processor that identifies a set of symbols of a slot corresponding to a PRACH occasion and detects overriding slot format information of the set of symbols. Here, the overriding slot format information (e.g., DCI with SFI-index field) indicates that the set of symbols are not uplink symbols (e.g., the SFI-index field value indicates the set of symbols as DL or flexible). The processor determines whether the set of symbols corresponds to a full-duplex slot and controls the transceiver to transmit a first RACH message (e.g., MsgA or Msg1/PRACH preamble) during the PRACH occasion when the set of symbols corresponds to a full-duplex slot.

In some embodiments, transmitting the first RACH message includes applying an additional power offset when the set of symbols corresponds to a full-duplex slot. In some embodiments, the transceiver further receives a configuration that contains a first power ramping factor for use when the set of symbols corresponds to a full-duplex slot and a second power ramping factor for use when the set of symbols corresponds to a non-full-duplex slot. In such embodiments, transmitting the first RACH message includes applying the first power ramping factor.

In some embodiments, the first RACH message includes a MsgA of a two-step RACH procedure. In such embodiments, the processor further applies a separate predetermined (i.e., predefined or preconfigured) MCS value and alpha value to the MsgA when the set of symbols corresponds to a full-duplex slot. In some embodiments, the transceiver further receives a PDCCH order for contention-free RACH procedure prior to transmitting the first RACH message, where the PDCCH order includes an indication to use a supplementary PRACH occasion that includes at least one flexible symbol and/or downlink symbol.

Disclosed herein is a first method for selecting an uplink transmission parameter based on duplex mode, according to embodiments of the disclosure. The first method may be performed by a UE device, such as the remote unit 105, the UE 205, and/or the user equipment apparatus 500, described above. The first method includes receiving a configuration that includes: A) a first set of LCH restriction configurations, and B) a second set of LCH restriction configurations different than the first set of logical channel restriction configurations. The first method includes receiving an uplink resource allocation from a network entity (e.g., a gNB), where the uplink resource allocation indicates uplink resources for an initial PUSCH transmission. The method includes determining a duplex mode corresponding to the uplink resource allocation and generating a TB corresponding to the uplink resource allocation. The TB is generated based on the first set of LCH restriction configurations when the PUSCH is to be transmitted in a set of symbols indicated as being operated in a first duplex mode. The TB is generated based on the second set of LCH restriction configurations when the PUSCH is to be transmitted in a set of symbols having at least one symbol indicated as being operated in a second duplex mode. The first method includes transmitting the generated TB on the allocated uplink resources.

In some embodiments, the first duplex mode corresponds to a full duplex mode and the second duplex mode corresponds to a non-full duplex mode. In certain embodiments, for the first duplex mode, at least one symbol of the set of symbols allocated in the uplink resource allocation is indicated as downlink according to the slot format information. In certain embodiments, the second set of LCH restriction configurations supports a higher level of QoS than the first set of LCH restriction configurations.

In certain embodiments, the first set of LCH restriction configurations includes a restriction against multiplexing data of certain logical channels. In such embodiments, the first method may further include receiving a parameter indicating whether a particular LCH is allowed to be multiplexed in a TB when the network entity operates in full duplex mode. In one embodiment, the UE is not allowed to multiplex URLLC data when the PUSCH duration is operated in FD mode. In certain embodiments, multiplexing a MAC CE into the TB is not allowed when the PUSCH is to be transmitted in a set of symbols indicated as being operated in a first duplex mode.

In some embodiments, receiving the uplink resource allocation includes receiving DCI scheduling the PUSCH transmission. In certain embodiments, determining the duplex mode corresponding to the uplink resource allocation includes receiving, in the DCI, an indication of the duplex mode. In certain embodiments, determining the duplex mode corresponding to the uplink resource allocation includes receiving, in the DCI, an indication of which set of LCH restriction configurations to use.

In some embodiments, the received configuration further includes a first power control parameter set and a second power control parameter set. In such embodiments, transmitting the generated TB on the allocated uplink resources further includes: A) applying the first power control parameter set when the PUSCH is to be transmitted in a set of symbols indicated as being operated in the first duplex mode; and B) applying the second power control parameter set when the PUSCH is to be transmitted in a set of symbols having at least one symbol indicated as being operated in the second duplex mode.

In some embodiments, transmitting the generated TB on the allocated uplink resources includes applying a predetermined power offset when the PUSCH is to be transmitted in a set of symbols predicted as being operated in the first duplex mode.

Disclosed herein is a second method for selecting an uplink transmission parameter based on duplex mode, according to embodiments of the disclosure. The second method may be performed by a UE device, such as the remote unit 105, the UE 205, and/or the user equipment apparatus 500, described above. The second method includes identifying a set of symbols of a slot corresponding to a PRACH occasion and detecting overriding slot format information (e.g., DCI with SFI-index field) of the set of symbols, where the overriding slot format information indicates that the set of symbols are not uplink symbols (e.g., the SFI-index field value indicates the set of symbols as DL or flexible). The second method includes determining whether the set of symbols corresponds to a full-duplex slot and transmitting a first RACH message (e.g., MsgA or Msg1/PRACH preamble) during the PRACH occasion when the set of symbols corresponds to a full-duplex slot.

In some embodiments, transmitting the first RACH message includes applying an additional power offset when the set of symbols corresponds to a full-duplex slot. In some embodiments, the second method further includes receiving a configuration that contains a first power ramping factor for use when the set of symbols corresponds to a full-duplex slot and a second power ramping factor for use when the set of symbols corresponds to a non-full-duplex slot. In such embodiments, transmitting the first RACH message includes applying the first power ramping factor.

In some embodiments, the first RACH message includes a MsgA of a two-step RACH procedure. In such embodiments, the second method further includes applying a separate predetermined (i.e., predefined or preconfigured) MCS value and alpha value to the MsgA when the set of symbols corresponds to a full-duplex slot. In some embodiments, the second method further includes receiving a PDCCH order for contention-free RACH procedure prior to transmitting the first RACH message, where the PDCCH order includes an indication to use a supplementary PRACH occasion that includes at least one flexible symbol and/or downlink symbol.

Disclosed herein is a third apparatus for selecting an uplink transmission parameter based on duplex mode, according to embodiments of the disclosure. The third apparatus may be implemented by a network entity in a mobile communication network, such as the base unit 121, the RAN node 207, and/or the network apparatus 600, described above. The third apparatus includes a processor, a transmitter, and a receiver. The transmitter transmits a configuration containing: A) a first set of LCH restriction configurations, and B) a second set of LCH restriction configurations different than the first set of logical channel restriction configurations. The transmitter transmits an uplink resource allocation to a UE, said uplink resource allocation indicating uplink resources for an initial PUSCH transmission. The receiver receives a TB from the UE on the allocated uplink resources, where the TB is generated based on the first set of LCH restriction configurations when the PUSCH is transmitted in a set of symbols indicated as being operated in a first duplex mode, and where the TB is generated based on the second set of LCH restriction configurations when the PUSCH is transmitted in a set of symbols having at least one symbol indicated as being operated in a second duplex mode.

In some embodiments, the first duplex mode corresponds to a full duplex mode and the second duplex mode corresponds to a non-full duplex mode. In certain embodiments, for the first duplex mode, at least one symbol of the set of symbols allocated in the uplink resource allocation is indicated as downlink according to the slot format information.

In certain embodiments, the second set of LCH restriction configurations supports a higher level of QoS than the first set of LCH restriction configurations. In certain embodiments, multiplexing a MAC CE into the TB is not allowed when the PUSCH is to be transmitted in a set of symbols indicated as being operated in a first duplex mode.

In certain embodiments, the first set of LCH restriction configurations includes a restriction against multiplexing data of certain logical channels. In one embodiment, the UE is not allowed to multiplex URLLC data when the PUSCH duration is operated in FD mode. In further embodiments, the third method includes transmitting a parameter indicating whether a particular LCH is allowed to be multiplexed in a TB when the network entity operates in full duplex mode.

In some embodiments, transmitting the uplink resource allocation includes transmitting DCI scheduling the PUSCH transmission. In certain embodiments, the third method may further include transmitting an indication of the duplex mode in the DCI. In certain embodiments, the third method may further include transmitting, in the DCI, an indication of which set of LCH restriction configurations to use.

In some embodiments, the transmitted configuration further includes: A) a first power control parameter set for use when the PUSCH is transmitted in a set of symbols indicated as being operated in a first duplex mode with; and B) a second power control parameter set for use when the PUSCH is transmitted in a set of symbols having at least one symbol indicated as being operated in a second duplex mode.

Disclosed herein is a fourth apparatus for selecting an uplink transmission parameter based on duplex mode, according to embodiments of the disclosure. The fourth apparatus may be implemented by a network entity in a mobile communication network, such as the base unit 121, the RAN node 207, and/or the network apparatus 600, described above. The fourth apparatus includes a processor and a transceiver that transmits overriding slot format information of a set of symbols of a slot corresponding to a PRACH occasion. Here, the overriding slot format information (e.g., DCI with SFI-index field) indicates that the set of symbols are not uplink symbols (e.g., the SFI-index field value indicates the set of symbols as DL or flexible). The fourth apparatus includes a receiver that receives a first RACH message (e.g., MsgA or Msg1/PRACH preamble) during the PRACH occasion when the set of symbols corresponds to a full-duplex slot.

In some embodiments, the transmitter further transmits a configuration to the UE, where the configuration contains a first power ramping factor for use when the set of symbols corresponds to a full-duplex slot and a second power ramping factor for use when the set of symbols corresponds to a non-full-duplex slot.

In some embodiments, the first RACH message includes a MsgA of a two-step RACH procedure. In such embodiments, the processor further configures the UE with a separate predetermined (i.e., predefined or preconfigured) MCS value and alpha value to use for the MsgA when the set of symbols corresponds to a full-duplex slot.

In some embodiments, the transmitter further transmits to the UE a PDCCH order for contention-free RACH procedure, where the PDCCH order includes an indication to use a supplementary PRACH occasion that includes at least one flexible symbol and/or downlink symbol.

Disclosed herein is a third method for selecting an uplink transmission parameter based on duplex mode, according to embodiments of the disclosure. The third method may be performed by a network entity in a mobile communication network, such as the base unit 121, the RAN node 207, and/or the network apparatus 600, described above. The third method includes transmitting a configuration including: A) a first set of LCH restriction configurations, and B) a second set of LCH restriction configurations different than the first set of logical channel restriction configurations. The third method includes transmitting an uplink resource allocation to a UE, said uplink resource allocation indicating uplink resources for an initial PUSCH transmission. The third method includes receiving a TB from the UE on the allocated uplink resources, where the TB is generated based on the first set of LCH restriction configurations when the PUSCH is transmitted in a set of symbols indicated as being operated in a first duplex mode, and where the TB is generated based on the second set of LCH restriction configurations when the PUSCH is transmitted in a set of symbols having at least one symbol indicated as being operated in a second duplex mode.

In some embodiments, the first duplex mode corresponds to a full duplex mode and the second duplex mode corresponds to a non-full duplex mode. In certain embodiments, for the first duplex mode, at least one symbol of the set of symbols allocated in the uplink resource allocation is indicated as downlink according to the slot format information.

In certain embodiments, the second set of LCH restriction configurations supports a higher level of QoS than the first set of LCH restriction configurations. In certain embodiments, multiplexing a MAC CE into the TB is not allowed when the PUSCH is to be transmitted in a set of symbols indicated as being operated in a first duplex mode.

In certain embodiments, the first set of LCH restriction configurations includes a restriction against multiplexing data of certain logical channels. In one embodiment, the UE is not allowed to multiplex URLLC data when the PUSCH duration is operated in FD mode. In further embodiments, the third method includes transmitting a parameter indicating whether a particular LCH is allowed to be multiplexed in a TB when the network entity operates in full duplex mode.

In some embodiments, transmitting the uplink resource allocation includes transmitting DCI scheduling the PUSCH transmission. In certain embodiments, the third method may further include transmitting an indication of the duplex mode in the DCI. In certain embodiments, the third method may further include transmitting, in the DCI, an indication of which set of LCH restriction configurations to use.

In some embodiments, the transmitted configuration further includes: A) a first power control parameter set for use when the PUSCH is transmitted in a set of symbols indicated as being operated in a first duplex mode with; and B) a second power control parameter set for use when the PUSCH is transmitted in a set of symbols having at least one symbol indicated as being operated in a second duplex mode.

Disclosed herein is a fourth method for selecting an uplink transmission parameter based on duplex mode, according to embodiments of the disclosure. The fourth method may be performed by a network entity in a mobile communication network, such as the base unit 121, the RAN node 207, and/or the network apparatus 600, described above. The fourth method includes transmitting an overriding slot format information (e.g., DCI with SFI-index field) of the set of symbols, where the overriding slot format information indicates that the set of symbols are not uplink symbols (e.g., the SFI-index field value indicates the set of symbols as DL or flexible). The fourth method includes receiving a first RACH message (e.g., MsgA or Msg1/PRACH preamble) from a UE during the PRACH occasion when the set of symbols corresponds to a full-duplex slot.

In some embodiments, the fourth method further includes transmitting a configuration to the UE, where the configuration contains a first power ramping factor for use when the set of symbols corresponds to a full-duplex slot and a second power ramping factor for use when the set of symbols corresponds to a non-full-duplex slot.

In some embodiments, the first RACH message includes a MsgA of a two-step RACH procedure. In such embodiments, the fourth method further includes configuring the UE with a separate predetermined (i.e., predefined or preconfigured) MCS value and alpha value to use for the MsgA when the set of symbols corresponds to a full-duplex slot.

In some embodiments, the fourth method further includes transmitting to the UE a PDCCH order for contention-free RACH procedure, where the PDCCH order includes an indication to use a supplementary PRACH occasion that includes at least one flexible symbol and/or downlink symbol.

Embodiments may be practiced in other specific forms. The described embodiments are to be considered in all respects only as illustrative and not restrictive. The scope of the invention is, therefore, indicated by the appended claims rather than by the foregoing description.

**Claims**

1. A method of a User Equipment, UE, the method comprising:

   receiving (705) a configuration comprising a first set of logical channel, LCH, restriction configurations and a second set of LCH restriction configurations different than the first set of logical channel restriction configurations;
   receiving (710) an uplink resource allocation from a network entity, the uplink resource allocation indicating uplink resources for an initial physical uplink shared channel, PUSCH, transmission;
   generating (715) a transport block, TB, corresponding to the uplink resource allocation, wherein the TB is generated based on the first set of LCH restriction configurations when the initial PUSCH transmission is to be transmitted on a first set of symbols indicated as being operated in a first duplex mode, and wherein the TB is generated based on the second set of LCH restriction configurations when the initial PUSCH transmission is to be transmitted on a second set of symbols having at least one symbol indicated as being operated in a second duplex mode;
   transmitting the generated TB on the allocated uplink resources, wherein the first duplex mode corresponds to a full duplex mode and the second duplex mode corresponds to a non-full duplex mode.

2. The method of claim 1, wherein at least one symbol of the first set of symbols is indicated as downlink according to a slot format indicator, SFI.

3. The method of claim 1, wherein the second set of LCH restriction configurations supports a higher level of Quality of Service, QoS, than the first set of LCH restriction configurations.

4. The method of claim 1, wherein the first set of LCH restriction configurations comprises a restriction against multiplexing data of certain logical channels, the method further comprising receiving a parameter indicating whether a particular LCH is allowed to be multiplexed in the TB when the network entity operates in full duplex mode.

5. The method of claim 1, wherein multiplexing a medium access control-control element, MAC-CE, into the TB is not allowed when the initial PUSCH transmission is to be transmitted in the first set of symbols indicated as being operated in the first duplex mode.

6. The method of claim 1, wherein receiving the uplink resource allocation comprises receiving downlink control information, DCI, scheduling the initial PUSCH transmission, wherein a determining of the duplex mode corresponding to the uplink resource allocation comprises receiving an indication in the DCI of the duplex mode.

7. The method of claim 1, wherein receiving the uplink resource allocation comprises receiving downlink control information, DCI, scheduling the initial PUSCH transmission, wherein a determining of the duplex mode corresponding to the uplink resource allocation comprises receiving an indication in the DCI of the first set of LCH restriction configurations or the second set of LCH restriction configurations, or both.

8. The method of claim 1, wherein the received configuration further comprises a first power control parameter set and a second power control parameter set, wherein transmitting the generated TB on the allocated uplink resources comprises:

applying the first power control parameter set when the initial PUSCH transmission is to be transmitted in a first set of symbols indicated as being operated in the first duplex mode; and
applying the second power control parameter set when the initial PUSCH transmission is to be transmitted in a second set of symbols having at least one symbol indicated as being operated in the second duplex mode.

9. The method of claim 1, wherein transmitting the generated TB on the allocated uplink resources comprises applying a predetermined power offset when the initial PUSCH transmission is to be transmitted in a first set of symbols predicted as being operated in the first duplex mode.

10. A User Equipment, UE, comprising:

a processor 505;
a memory 510; and
a transceiver 525,

the processor being configured to

receive a configuration comprising a first set of logical channel, LCH, restriction configurations and a second set of LCH restriction configurations different than the first set of logical channel restriction configurations;
receive an uplink resource allocation from a network entity, the uplink resource allocation indicating uplink resources for an initial physical uplink shared channel, PUSCH, transmission;
generate a transport block, TB, corresponding to the uplink resource allocation, wherein the TB is generated based on the first set of LCH restriction configurations when the initial PUSCH transmission is to be transmitted on a first set of symbols indicated as being operated in a first duplex mode, and wherein the TB is generated based on the second set of LCH restriction configurations when the initial PUSCH transmission is to be transmitted on a second set of symbols having at least one symbol indicated as being operated in a second duplex mode;
transmit the generated TB on the allocated uplink resources, wherein the first duplex mode corresponds to a full duplex mode and the second duplex mode corresponds to a non-full duplex mode.

11. The user equipment of claim 1, wherein at least one symbol of the first set of symbols is indicated as downlink according to a slot format indicator, SFI.

12. The user equipment of claim 10, wherein the second set of LCH restriction configurations supports a higher level of Quality of Service, QoS, than the first set of LCH restriction configurations.

13. The user equipment of claim 10, wherein the first set of LCH restriction configurations 30 comprises a restriction against multiplexing data of certain logical channels, the processor being further configured to receive a parameter indicating whether a particular LCH is allowed to be multiplexed in the when the network entity operates in full duplex mode.

**14.** The user equipment of claim 10, wherein multiplexing a medium access control-control element, MAC-CE, into the TB is not allowed when the initial PUSCH transmission is to be transmitted in the first set of symbols indicated as being operated in the first duplex mode.

**15.** The user equipment of claim 10, wherein receiving the uplink resource allocation comprises receiving downlink control information, DCI, scheduling the initial PUSCH transmission, wherein a determining of the duplex mode corresponding to the uplink resource allocation comprises receiving an indication in the DCI of the duplex mode.

**Patentansprüche**

**1.** Verfahren für ein Benutzergerät, UE, wobei das Verfahren umfasst:

Empfangen (705) einer Konfiguration, die einen ersten Satz von logischen Kanal-, LCH, Beschränkungskonfigurationen und einen zweiten Satz von LCH-Beschränkungskonfigurationen umfasst, die sich von dem ersten Satz logischer Kanal-Beschränkungskonfigurationen unterscheiden;
Empfangen (710) einer Uplink-Ressourcenzuweisung von einer Netzwerkeinheit, wobei die Uplink-Ressourcenzuweisung die Uplink-Ressourcen für eine anfängliche physische Uplink-Shared-Channel-, PUSCH, Übertragung angibt;
Erzeugen (715) eines Transportblocks, TB, der der Uplink-Ressourcenzuweisung entspricht, wobei der TB auf der Grundlage des ersten Satzes von LCH-Beschränkungskonfigurationen erzeugt wird, wenn die anfängliche PUSCH-Übertragung auf einem ersten Satz von Symbolen übertragen werden soll, die als im ersten Duplexmodus betrieben gekennzeichnet sind, und wobei der TB auf der Grundlage des zweiten Satzes von LCH- Beschränkungskonfigurationen erzeugt wird, wenn die anfängliche PUSCH-Übertragung auf einem zweiten Satz von Symbolen übertragen werden soll, der mindestens ein Symbol aufweist, das als im zweiten Duplexmodus betrieben gekennzeichnet ist;
Übertragen des erzeugten TB auf den zugewiesenen Uplink-Ressourcen, wobei der erste Duplexmodus einem Vollduplexmodus und der zweite Duplexmodus einem Nicht-Vollduplexmodus entspricht.

**2.** Verfahren nach Anspruch 1, wobei zumindest ein Symbol des ersten Satzes von Symbolen gemäß einem Slot- Format-Indikator, SFI, als Downlink gekennzeichnet ist.

**3.** Verfahren nach Anspruch 1, wobei der zweite Satz von LCH-Beschränkungskonfigurationen ein höheres Maß an Dienstgüte, QoS, unterstützt als der erste Satz von LCH-Beschränkungskonfigurationen.

**4.** Verfahren nach Anspruch 1, wobei der erste Satz von LCH-Beschränkungskonfigurationen eine Beschränkung gegen das Multiplexen von Daten bestimmter logischer Kanäle umfasst, wobei das Verfahren ferner das Empfangen eines Parameters umfasst, der angibt, ob ein bestimmter LCH im TB gemultiplext werden darf, wenn die Netzwerkeinheit im Vollduplexmodus betrieben wird.

**5.** Verfahren nach Anspruch 1, wobei das Multiplexen eines Medium Access Control Steuerelement, MAC-CE, in den TB nicht zulässig ist, wenn die anfängliche PUSCH-Übertragung im ersten Satz von Symbolen übertragen werden soll, die als im ersten Duplexmodus betrieben gekennzeichnet ist.

**6.** Verfahren nach Anspruch 1, wobei das Empfangen der Uplink-Ressourcenzuweisung das Empfangen von Downlink- Steuerinformationen, DCI, und das Planen der ersten PUSCH-Übertragung umfasst, wobei eine Bestimmung des Duplexmodus als entsprechend der Uplink-Ressourcenzuweisung das Empfangen einer Anzeige des Duplexmodus in den DCI umfasst.

**7.** Verfahren nach Anspruch 1, wobei das Empfangen der Uplink-Ressourcenzuweisung das Empfangen von Downlink- Steuerinformationen, DCI, und das Planen der ersten PUSCH-Übertragung umfasst, wobei eine Bestimmung des Duplexmodus als entsprechend der Uplink-Ressourcenzuweisung das Empfangen einer Anzeige des Duplexmodus in den DCI des ersten Satzes von LCH-Beschränkungskonfigurationen oder des zweiten Satzes von LCH-Beschränkungskonfigurationen oder beider umfasst.

**8.** Verfahren nach Anspruch 1, wobei die empfangene Konfiguration ferner einen ersten Satz von Leistungssteuerungsparametern und einen zweiten Satz von Leistungssteuerungsparametern umfasst, wobei die Übertragung des erzeugten TB auf den zugewiesenen Uplink-Ressourcen Folgendes umfasst:

Anwenden des ersten Satzes von Leistungssteuerungsparametern, wenn die anfängliche PUSCH-Übertragung in einem ersten Satz von Symbolen übertragen werden soll, der als im ersten Duplexmodus betrieben gekennzeichnet ist; und

Anwenden des zweiten Satzes von Leistungssteuerungsparametern, wenn die anfängliche PUSCH-Übertragung in einem zweiten Satz von Symbolen übertragen werden soll, der mindestens ein Symbol aufweist, das als im zweiten Duplexmodus betrieben gekennzeichnet ist.

9. Verfahren nach Anspruch 1, wobei das Übertragen des erzeugten TB auf den zugewiesenen Uplink-Ressourcen das Anwenden eines vorbestimmten Leistungsversatzes umfasst, wenn die anfängliche PUSCH-Übertragung in einem ersten Satz von Symbolen übertragen werden soll, der im ersten Duplexmodus betrieben vorhergesagt wird.

10. Benutzergerät, UE, umfassend:

einen Prozessor 505;
einen Speicher 510; und
einen Transceiver 525,
wobei der Prozessor konfiguriert ist, zum
Empfangen einer Konfiguration, die einen ersten Satz von logischen Kanal-, LCH, Beschränkungskonfigurationen und einen zweiten Satz von LCH-Beschränkungskonfigurationen umfasst, die sich von dem ersten Satz logischer Kanal-Beschränkungskonfigurationen unterscheiden;
Empfangen einer Uplink-Ressourcenzuweisung von einer Netzwerkeinheit, wobei die Uplink-Ressourcenzuweisung die Uplink-Ressourcen für eine anfängliche physische Uplink-Shared-Channel-, PUSCH, Übertragung angibt;
Erzeugen eines Transportblocks, TB, der der Uplink-Ressourcenzuweisung entspricht, wobei der TB auf der Grundlage des ersten Satzes von LCH-Beschränkungskonfigurationen erzeugt wird, wenn die anfängliche PUSCH-Übertragung auf einem ersten Satz von Symbolen übertragen werden soll, die als im ersten Duplexmodus betrieben gekennzeichnet sind, und wobei der TB auf der Grundlage des zweiten Satzes von LCH-Beschränkungskonfigurationen erzeugt wird, wenn die anfängliche PUSCH-Übertragung auf einem zweiten Satz von Symbolen übertragen werden soll, der mindestens ein Symbol aufweist, das als im zweiten Duplexmodus betrieben gekennzeichnet ist;
Übertragen des erzeugten TB auf den zugewiesenen Uplink-Ressourcen, wobei der erste Duplexmodus einem Vollduplexmodus und der zweite Duplexmodus einem Nicht-Vollduplexmodus entspricht.

11. Benutzergerät nach Anspruch 1, wobei zumindest ein Symbol des ersten Satzes von Symbolen gemäß einem Slot-Format-Indikator, SFI, als Downlink gekennzeichnet ist.

12. Benutzergerät nach Anspruch 10, wobei der zweite Satz von LCH-Beschränkungskonfigurationen ein höheres Maß an Dienstgüte, QoS, unterstützt als der erste Satz von LCH-Beschränkungskonfigurationen.

13. Benutzergerät nach Anspruch 10, wobei der erste Satz von LCH-Beschränkungskonfigurationen 30 eine Beschränkung gegen das Multiplexen von Daten bestimmter logischer Kanäle umfasst, wobei der Prozessor ferner so konfiguriert ist, dass er einen Parameter empfängt, der angibt, ob ein bestimmter LCH im TB gemultiplext werden darf, wenn die Netzwerkeinheit im Vollduplex-Modus betrieben wird.

14. Benutzergerät nach Anspruch 10, wobei das Multiplexen eines Medium Access Control Steuerelement, MAC-CE, in den TB nicht zulässig ist, wenn die anfängliche PUSCH-Übertragung im ersten Satz von Symbolen übertragen werden soll, die als im ersten Duplexmodus betrieben gekennzeichnet ist.

15. Benutzergerät nach Anspruch 10, wobei das Empfangen der Uplink-Ressourcenzuweisung das Empfangen von Downlink-Steuerinformationen, DCI, und das Planen der ersten PUSCH-Übertragung umfasst, wobei eine Bestimmung des Duplexmodus als entsprechend der Uplink-Ressourcenzuweisung das Empfangen einer Anzeige des Duplexmodus in den DCI umfasst.

**Revendications**

1.  Procédé d'un équipement utilisateur, EU, le procédé comprenant :

    la réception (705) d'une configuration comprenant un premier ensemble de configurations de restriction de canal logique, LCH, et un second ensemble de configurations de restriction LCH différent du premier ensemble de configurations de restriction de canal logique ;
    la réception (710) d'une allocation de ressources de liaison montante à partir d'une entité de réseau, l'allocation de ressources de liaison montante indiquant des ressources de liaison montante pour une transmission de canal physique partagé de liaison montante, PUSCH, initiale ;
    la génération (715) d'un bloc de transport, TB, correspondant à l'allocation de ressources de liaison montante, dans lequel le TB est généré sur la base du premier ensemble de configurations de restriction LCH lorsque la transmission PUSCH initiale doit être transmise sur un premier ensemble de symboles indiqués comme fonctionnant dans un premier mode duplex, et dans lequel le TB est généré sur la base du second ensemble de configurations de restriction LCH lorsque la transmission PUSCH initiale doit être transmise sur un second ensemble de symboles présentant au moins un symbole indiqué comme fonctionnant dans un second mode duplex;
    la transmission du TB généré sur les ressources de liaison montante allouées, dans lequel le premier mode duplex correspond à un mode duplex intégral et le second mode duplex correspond à un mode non duplex intégral.

2.  Procédé selon la revendication 1, dans lequel au moins un symbole du premier ensemble de symboles est indiqué comme liaison descendante selon un indicateur de format d'intervalle de temps, SFI.

3.  Procédé selon la revendication 1, dans lequel le second ensemble de configurations de restriction LCH prend en charge un plus haut niveau de qualité de service, QoS, que le premier ensemble de configurations de restriction LCH.

4.  Procédé selon la revendication 1, dans lequel le premier ensemble de configurations de restriction LCH comprend une restriction contre le multiplexage de données de certains canaux logiques, le procédé comprenant en outre la réception d'un paramètre indiquant si un LCH particulier est autorisé à être multiplexé dans le TB lorsque l'entité de réseau fonctionne en mode duplex intégral.

5.  Procédé selon la revendication 1, dans lequel le multiplexage d'un élément de commande de commande d'accès au support, MAC-CE, dans le TB n'est pas autorisé lorsque la transmission PUSCH initiale doit être transmise dans le premier ensemble de symboles indiqué comme fonctionnant dans le premier mode duplex.

6.  Procédé selon la revendication 1, dans lequel la réception de l'allocation de ressources de liaison montante comprend la réception d'informations de commande de liaison descendante, DCI, planifiant la transmission PUSCH initiale, dans lequel une détermination du mode duplex correspondant à l'allocation de ressources de liaison montante comprend la réception d'une indication dans les DCI du mode duplex.

7.  Procédé selon la revendication 1, dans lequel la réception de l'allocation de ressources de liaison montante comprend la réception d'informations de commande de liaison descendante, DCI, planifiant la transmission PUSCH initiale, dans lequel une détermination du mode duplex correspondant à l'allocation de ressources de liaison montante comprend la réception d'une indication dans les DCI du premier ensemble de configurations de restriction LCH ou du second ensemble de configurations de restriction LCH, ou des deux.

8.  Procédé selon la revendication 1, dans lequel la configuration reçue comprend en outre un premier ensemble de paramètres de commande de puissance et un second ensemble de paramètres de commande de puissance, dans lequel la transmission du TB généré sur les ressources de liaison montante allouées comprend :

    l'application du premier ensemble de paramètres de commande de puissance lorsque la transmission PUSCH initiale doit être transmise dans un premier ensemble de symboles indiqué comme fonctionnant dans le premier mode duplex ; et
    l'application du second ensemble de paramètres de commande de puissance lorsque la transmission PUSCH initiale doit être transmise dans un second ensemble de symboles présentant au moins un symbole indiqué comme fonctionnant dans le second mode duplex.

**9.** Procédé selon la revendication 1, dans lequel la transmission du TB généré sur les ressources de liaison montante allouées comprend l'application d'un décalage de puissance prédéterminé lorsque la transmission PUSCH initiale doit être transmise dans un premier ensemble de symboles prédits comme fonctionnant dans le premier mode duplex.

**10.** Équipement utilisateur, UE, comprenant :

un processeur 505 ;
une mémoire 510 ; et
un émetteur-récepteur 525 ;
le processeur étant configuré pour :

recevoir une configuration comprenant un premier ensemble de configurations de restriction de canal logique, LCH, et un second ensemble de configurations de restriction LCH différent du premier ensemble de configurations de restriction de canal logique ;
recevoir une allocation de ressources de liaison montante à partir d'une entité de réseau, l'allocation de ressources de liaison montante indiquant des ressources de liaison montante pour une transmission de canal physique partagé de liaison montante, PUSCH, initiale ;
générer un bloc de transport, TB, correspondant à l'allocation de ressources de liaison montante, dans lequel le TB est généré sur la base du premier ensemble de configurations de restriction LCH lorsque la transmission PUSCH initiale doit être transmise sur un premier ensemble de symboles indiqués comme fonctionnant dans un premier mode duplex, et dans lequel le TB est généré sur la base du second ensemble de configurations de restriction LCH lorsque la transmission PUSCH initiale doit être transmise sur un second ensemble de symboles présentant au moins un symbole indiqué comme fonctionnant dans un second mode duplex ;
transmettre le TB généré sur les ressources de liaison montante allouées, dans lequel le premier mode duplex correspond à un mode duplex intégral et le second mode duplex correspond à un mode non duplex intégral.

**11.** Équipement utilisateur selon la revendication 1, dans lequel au moins un symbole du premier ensemble de symboles est indiqué comme liaison descendante selon un indicateur de format d'intervalle de temps, SFI.

**12.** Équipement utilisateur selon la revendication 10, dans lequel le second ensemble de configurations de restriction LCH prend en charge un plus haut niveau de qualité de service, QoS, que le premier ensemble de configurations de restriction LCH.

**13.** Équipement utilisateur selon la revendication 10, dans lequel le premier ensemble de configurations de restriction LCH (30) comprend une restriction contre le multiplexage des données de certains canaux logiques, le processeur étant en outre configuré pour recevoir un paramètre indiquant si un LCH particulier est autorisé à être multiplexé dans le TB lorsque l'entité de réseau fonctionne en mode duplex intégral.

**14.** Équipement utilisateur selon la revendication 10, dans lequel le multiplexage d'un élément de commande de commande d'accès au support, MAC-CE, dans le TB n'est pas autorisé lorsque la transmission PUSCH initiale doit être transmise dans le premier ensemble de symboles indiqué comme fonctionnant dans le premier mode duplex.

**15.** Équipement utilisateur selon la revendication 10, dans lequel la réception de l'allocation de ressources de liaison montante comprend la réception d'informations de commande de liaison descendante, DCI, planifiant la transmission PUSCH initiale, dans lequel une détermination du mode duplex correspondant à l'allocation de ressources de liaison montante comprend la réception d'une indication dans les DCI du mode duplex.

100

Mobile Core Network 140

UDM/UDR 149

SMF 145

PCF 147

UPF 141

AMF 143

Application Server 151

Data Network 150

N2

N3

Radio Access Network 120

Base Unit 121

Uu

N1

UL/DL 123

105

Remote Unit 105

App 107

FIG. 1

FIG. 2

300

| Duplex Mode | Frequency | Time |
|:---:|:---:|:---:|
| FDD | | |
| TDD | | |
| Full Duplex | | |

# FIG. 3

*MsgA-PUSCH-Config* information element

**FIG. 4**

```
-- ASN1START
-- TAG-MSGA-PUSCH-CONFIG-START
MsgA-PUSCH-Config-r16 ::=                 SEQUENCE {
    msgA-PUSCH-ResourceGroupA-r16         MsgA-PUSCH-Resource-r16          OPTIONAL, -- Cond InitialBWPConfig
    msgA-PUSCH-ResourceGroupB-r16         MsgA-PUSCH-Resource-r16          OPTIONAL, -- Cond GroupBConfigured
    msgA-TransformPrecoder-r16            ENUMERATED {enabled, disabled}      OPTIONAL, -- Need R
    msgA-DataScramblingIndex-r16          INTEGER (0..1023)                   OPTIONAL, -- Need S
    msgA-DeltaPreamble-r16                INTEGER (-1..6)                     OPTIONAL  -- Need R
}
MsgA-PUSCH-Resource-r16 ::=               SEQUENCE {
    msgA-MCS-r16                          INTEGER (0..15),                         ⟩ 405
    nrofSlotsMsgA-PUSCH-r16               INTEGER (1..4),
    nrofMsgA-PO-PerSlot-r16               ENUMERATED {one, two, three, six},
    msgA-PUSCH-TimeDomainOffset-r16       INTEGER (1..32),
    msgA-PUSCH-TimeDomainAllocation-r16   INTEGER (1..maxNrofUL-Allocations)  OPTIONAL, -- Need S
    startSymbolAndLengthMsgA-PO-r16       INTEGER (0..127)                    OPTIONAL, -- Need S
    mappingTypeMsgA-PUSCH-r16             ENUMERATED {typeA, typeB}           OPTIONAL, -- Need S
    guardPeriodMsgA-PUSCH-r16             INTEGER (0..3)                      OPTIONAL, -- Need R
    guardBandMsgA-PUSCH-r16               INTEGER (0..1),
    frequencyStartMsgA-PUSCH-r16          INTEGER (0..maxNrofPhysicalResourceBlocks-1),
    nrofPRBs-PerMsgA-PO-r16               INTEGER (1..32),
    nrofMsgA-PO-FDM-r16                   ENUMERATED {one, two, four, eight},
    msgA-IntraSlotFrequencyHopping-r16    ENUMERATED {enabled}                OPTIONAL, -- Need R
    msgA-HoppingBits-r16                  BIT STRING (SIZE(2))                OPTIONAL, -- Need R ⟩ 410
    msgA-DMRS-Config-r16                  MsgA-DMRS-Config-r16,
    nrofDMRS-Sequences-r16                INTEGER (1..2),
    msgA-Alpha-r16                        ENUMERATED {alpha0, alpha04, alpha05, alpha06,
                                                      alpha07, alpha08, alpha09, alpha1}  OPTIONAL, -- Need S
    interlaceIndexFirstPO-MsgA-PUSCH-r16  INTEGER (1..10)                     OPTIONAL, -- Need R
    nrofInterlacesPerMsgA-PO-r16          INTEGER (1..10)                     OPTIONAL, -- Need R
    ...
}
MsgA-DMRS-Config-r16 ::=                  SEQUENCE {
    msgA-DMRS-AdditionalPosition-r16      ENUMERATED {pos0, pos1, pos3}       OPTIONAL, -- Need S
    msgA-MaxLength-r16                    ENUMERATED {len2}                   OPTIONAL, -- Need S
    msgA-PUSCH-DMRS-CDM-Group-r16         INTEGER (0..1)                      OPTIONAL, -- Need S
    msgA-PUSCH-NrofPorts-r16              INTEGER (0..1)                      OPTIONAL, -- Need S
    msgA-ScramblingID0-r16                INTEGER (0..65535)                  OPTIONAL, -- Need S
    msgA-ScramblingID1-r16                INTEGER (0..65535)                  OPTIONAL  -- Need S
}
-- TAG-MSGA-PUSCH-CONFIG-STOP
-- ASN1STOP
```

32

User Equipment Apparatus
500

Processor
505

Memory
510

Input Device
515

Output Device
520

Transceiver 525

Transmitter
530

Receiver
535

Network Interface(s)
540

Application Interface(s)
545

## FIG. 5

Network Apparatus
600

Processor
605

Memory
610

Input Device
615

Output Device
620

Transceiver 625

Transmitter
630

Receiver
635

Network Interface(s)
640

Application Interface(s)
645

FIG. 6

700

Start

705 — Receive a configuration containing: A) a first set of LCH restriction configurations, and B) a second set of LCH restriction configurations different than the first set of logical channel restriction configurations

710 — Receive an uplink resource allocation from a network entity, the uplink resource allocation indicating uplink resources for an initial PUSCH transmission

715 — Generate a TB corresponding to the uplink resource allocation, where the TB is generated based on the first set of LCH restriction configurations when the PUSCH is to be transmitted in a set of symbols indicated as being operated in a first duplex mode, and where the TB is generated based on the second set of LCH restriction configurations when the PUSCH is to be transmitted in a set of symbols having at least one symbol indicated as being operated in a second duplex mode

720 — Transmit the generated TB on the allocated uplink resources

End

FIG. 7

800

Start

805 — Transmit a configuration containing: A) a first set of LCH restriction configurations, and B) a second set of LCH restriction configurations different than the first set of logical channel restriction configurations

810 — Transmit an uplink resource allocation from a network entity, the uplink resource allocation indicating uplink resources for an initial PUSCH transmission

815 — Receive a TB from the UE on the allocated uplink resources, where the TB is generated based on the first set of LCH restriction configurations when the PUSCH is transmitted in a set of symbols indicated as being operated in a first duplex mode, and where the TB is generated based on the second set of LCH restriction configurations when the PUSCH is transmitted in a set of symbols having at least one symbol indicated as being operated in a second duplex mode

End

# FIG. 8

900

Start

905 ⟋ Identify a set of symbols of a slot corresponding to a PRACH occasion

910 ⟋ Detect overriding slot format information of the set of symbols, where the overriding slot format information indicates that the set of symbols are not uplink symbols

915 ⟋ Transmit a first RACH message during the PRACH occasion when the set of symbols corresponds to a full-duplex slot

End

FIG. 9

1000

Start

1005 — Transmit overriding slot format information of the set of symbols, where the overriding slot format information indicates that the set of symbols are not uplink symbols

1010 — Receive a first RACH message during the PRACH occasion when the set of symbols corresponds to a full-duplex slot

End

# FIG. 10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2019099361 A1
- US 2019363843 A1

- WO 2017111821 A1